# EUROPÄISCHE PATENTSCHRIFT

(11) **EP 4 025 444 B1**
(45) Veröffentlichungstag und Bekanntmachung des Hinweises auf die Patenterteilung: **12.07.2023**
(21) Anmeldenummer: 21759227.8
(22) Anmeldetag: 31.08.2021
(51) Int. Cl.: B60K 7/00

(54) **BLOCKARTIGER ELEKTROMOTORISCHER KFZ-ANTRIEB FÜR EINZELRADANTRIEBE, INSBESONDERE MIT ZWEI PARKSPERREN**
BLOC-TYPE ELECTRIC MOTOR-POWERED MOTOR VEHICLE DRIVE FOR SINGLE-WHEEL DRIVES, IN PARTICULAR COMPRISING TWO PARK LOCKS
ENTRAÎNEMENT DE VÉHICULE AUTOMOBILE À MOTEUR ÉLECTRIQUE DE TYPE À BLOC POUR ENTRAÎNEMENTS À ROUE UNIQUE, EN PARTICULIER COMPRENANT DEUX VERROUS DE STATIONNEMENT

(30) Priorität: 04.09.2020 DE 202020105111 U; 04.09.2020 DE 202020105114 U; 12.08.2021 DE 202021104326 U
(43) Veröffentlichungstag der Anmeldung: 13.07.2022
(73) Patentinhaber: hofer powertrain innovation GmbH, 72622 Nürtingen (DE)
(72) Erfinder: SCHNEIDER, Severin, 78144 Tennenbronn (DE); DORNER, Dennis, 70191 Stuttgart (DE); WALTER, Pascal, 71404 Korb (DE)
(74) Vertreter: Cremer & Cremer
(86) Internationale Anmeldenummer: PCT/EP2021/074056
(87) Internationale Veröffentlichungsnummer: WO 2022/049088

(56) Entgegenhaltungen:
- EP-A1- 3 587 157
- EP-A2- 1 000 790
- WO-A1-2010/104189
- DE-A1-102010 017 966
- DE-T2- 69 702 231
- JP-A- 2009 120 126
- US-A- 5 927 417
- US-A1- 2007 213 160
- US-A1- 2018 236 982
- US-A1- 2019 061 504
- US-A1- 2019 131 851
- US-B2- 10 486 512

## Beschreibung

Die vorliegende Erfindung behandelt einen Antriebsblock eines elektromotorischen Kfz-Antriebs für zwei Einzelradantriebe, insbesondere mit einer oder mit zwei Parksperren.

Mit anderen Worten, die vorliegende Erfindung behandelt einen Antriebsblock nach dem Oberbegriff von Anspruch 1.

### Technisches Gebiet

Besonders interessant sind Antriebsstränge, durch die elektrische Einzelradantriebe realisierbar sind. Diese sogenannten Einzelradelektroantriebe bieten die Möglichkeit des elektrischen "torque vectoring". Bezüglich der Anordnung ihrer Komponenten und ihrer Wirkweisen können gepaarte Einzelradelektroantriebe auf verschiedene Arten und Weisen realisiert werden.

Manche Einzelradantriebe werden, so wie u. a. in der DE 10 2014 214 821 A1 (Anmelderin: Schaeffler Technologies GmbH & Co. KG; Offenlegungstag: 12.02.2015) beschrieben, durch Radnabenmotoren aufgebaut. Bei Antriebskonzepten mit Radnabenmotoren benötigen die Entwickler solcher Antriebskonzepte Bauraum an jedem anzutreibenden Rad, weil, so wie auch aus den beiden Figuren der DE 10 2014 214 821 A1 ersichtlich, Motor, Getriebe und ggf. weitere Komponenten des Antriebs unmittelbar neben dem anzutreibenden Rad in einem Kraftfahrzeug einzubauen sind.

Daher ist es für die Substitution von Verbrennungskraftmaschinen in fertig entwickelten Kraftfahrzeugen durch Elektroantriebe in vielen Fällen einfacher, blockartige bzw. zentralisiert angeordnete Antriebseinheiten für die vormalige Position der Verbrennungskraftmaschine und ihrer Komponenten und Anbauteile vorzusehen.

Auf der einen Seite sind zu Blöcken zusammengeschlossene Einzelradantriebe bekannt, bei denen jeweils einer von zwei Motoren über ein gemeinsames Twin-Getriebe, das das verbindende, den Block bildende Zwischenbauteil ist, eines der beiden Räder einer Achse eines Kraftfahrzeugs antreiben kann, so wie z. B. in den deutschen Gebrauchsmustern DE 20 2019 103 770 U1 (Inhaberin: hofer powertrain innovation GmbH), DE 20 2019 103 771 U1 (Inhaberin: hofer powertrain innovation GmbH), DE 20 2019 103 778 U1 (Inhaberin: hofer powertrain innovation GmbH), DE 20 2019 103 779 U1 (Inhaberin: hofer powertrain innovation GmbH) und DE 20 2019 103 781 U1 (Inhaberin: hofer powertrain innovation GmbH) beschrieben.

Auf der anderen Seite gibt es das Konzept, zwei voneinander getrennte Motoren in Fahrzeuglängsachse zumindest teilweise überdeckend anzuordnen und an ihren Stirnseiten jeweils ein eigenes, von dem anderen Getriebe abgesetztes Getriebe für die Drehzahlreduktion der Motordrehzahl auf eine Raddrehzahl vorzusehen, wie z. B. in der WO 2017/211 793 A1 (Anmelderin: Punch Powertrain N.V.; Veröffentlichungstag: 14.12.2017), in der DE 10 2010 010 438 A1 (Anmelderin: Dr. Ing. h.c. F. Porsche AG; Offenlegungstag: 01.09.2011) oder auch in der EP 3 587 157 A1 (Anmelderin: hofer powertrain innovation GmbH; Offenlegungstag: 01.01.2020) vorgestellt.

Während die WO 2017/211 793 A1 und die DE 10 2010 010 438 A1 noch davon ausgehen, dass ein Motor an einer Kraftfahrzeugachse nur dafür verwendet werden kann, jeweils ein Rad anzutreiben, zeigt die EP 3 587 157 A1 auf, dass die axial hintereinander, von Getrieben seitlich eingefassten beiden Motoren auch so arrangiert werden können, dass wahlweise ein Motor zwei Räder an einer gleichen Achse antreibt, jedoch auch ein Einzelradantrieb bei einem solchen Arrangement möglich ist.

Für solche, auch mit dem Schlagwort "Sandwich-Bauweise" aufgrund der seitlichen Einfassung durch die Getriebe bezeichneten Anordnungen von Einzelradantrieben zu einem Antriebsblock ergibt sich häufig, insbesondere bei kompakteren Fahrzeugen oder bei Sportwagen, ein Bauraumproblem.

### Stand der Technik

In der DE 10 2014 214 821 A1 (Anmelderin: Schaeffler Technologies GmbH & Co. KG; Offenlegungstag: 12.02.2015) wird ein Radnabenantrieb mit zwei Elektromotoren an einer Hinterachse beschrieben. Die Offenlegungsschrift macht sich am Ende ihrer Beschreibung darüber Gedanken, wie eine entsprechende Einzelradantriebseinrichtung zusätzlich auszustatten ist, um die Radantriebseinrichtung zu bremsen. Hierbei werden eine Scheibenbremse, eine Trommelbremse und eine Parksperre als Möglichkeiten zum Abbremsen eines mit entsprechenden Einzelradantriebseinrichtungen ausgestatteten Fahrzeugs angesprochen.

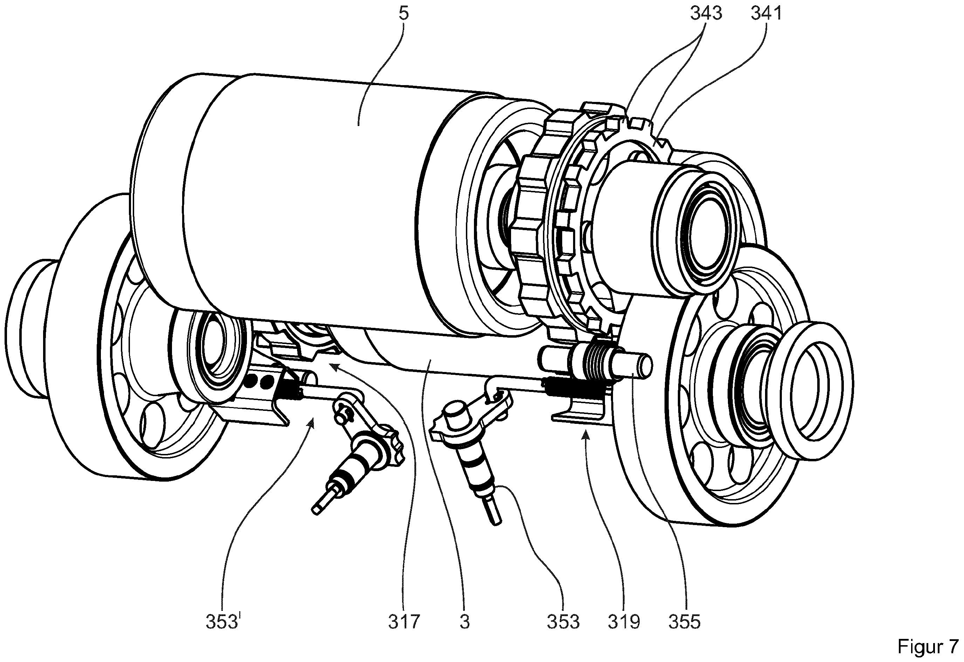

Die Patentanmeldung EP 1 000 790 A2 (Anmelderin Aisin AW Co., Ltd.; Veröffentlichungstag: 17.05.2000) beschäftigt sich mit einem Antriebsgerät, das mit einem Generator-Motor auf einer ersten Achslinie und einem Antriebsmotor auf einer zweiten Achslinie sowie einem Inverter für die beiden Motoren ausgestattet sein soll. Der Inverter soll im Bereich der Mäntel des Generator-Motors und des Antriebsmotors im Inneren des Gehäuses des Antriebsgeräts, also in Richtung einer Verlängerung ihrer Durchmesser, befestigt sein. Es handelt sich also um ein für alle Komponenten offenes Gehäusekonzept, bei dem die Inverterplatine im Inneren des Gehäuses des Antriebsgeräts platziert sein soll. Im Inneren kann aber zusätzlich eine Metallabdeckung angeordnet sein, die sich durch eine hohe Wärmeleitfähigkeit auszeichnet. Oberhalb des Inverters sollen gem. Figur 7 dann weitere, nicht näher spezifizierte Platinen angeordnet werden, sodass der Inverter möglichst nahe an dem Generator-Motor und möglichst nahe zum Antriebsmotor liegt. Offensichtlich ist eines der Probleme einer solchen Anordnung von einem ersten Antriebsmotor, einem Generator-Motor und einem Inverter die ausreichende Kühlung, für die gute Wärmesenken, z. B. in Gestalt einer metallischen Abdeckung, notwendig sind.

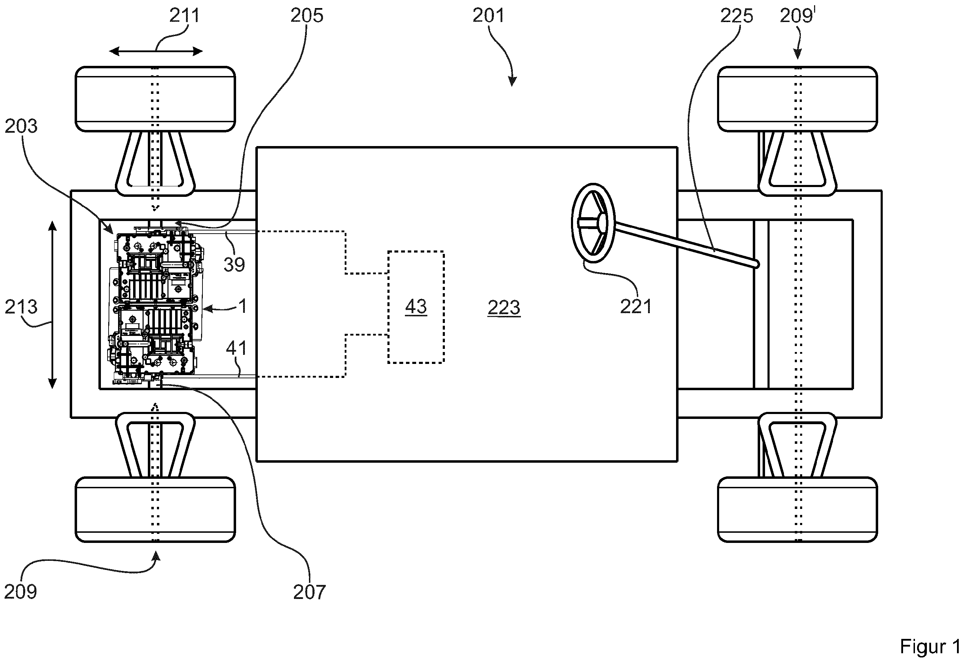

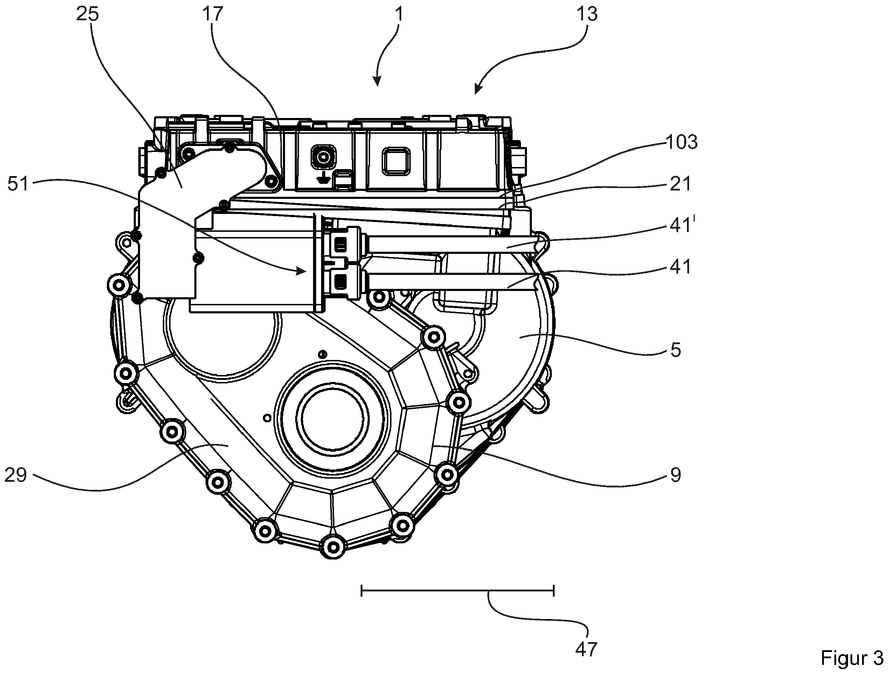

Ein Einzelradantrieb mit einer Bremse wird in der DE 10 2010 007 066 A1 (Anmelderin: Rheinmetall Landsysteme GmbH; Veröffentlichungstag: 11.08.2011) behandelt, die u. a. einen Achsbaustein für ein aus mehreren Fahrzeugmodulen zusammensetzbares, gepanzertes Radfahrzeug näher beschreibt. Wie in Figur 1 gezeigt wird, beherbergt eine durch ein Lagergestell in zwei Bauräume aufgeteilte Wanne zwei Achsgetriebe, die von zwei separat ausgeführten, oben angeordneten Elektromotoren angetrieben werden. In einem Querschacht soll sich eine nur in Figur 3 schematisch angedeutete Feststellbremse mit entsprechenden Bremsscheiben befinden.

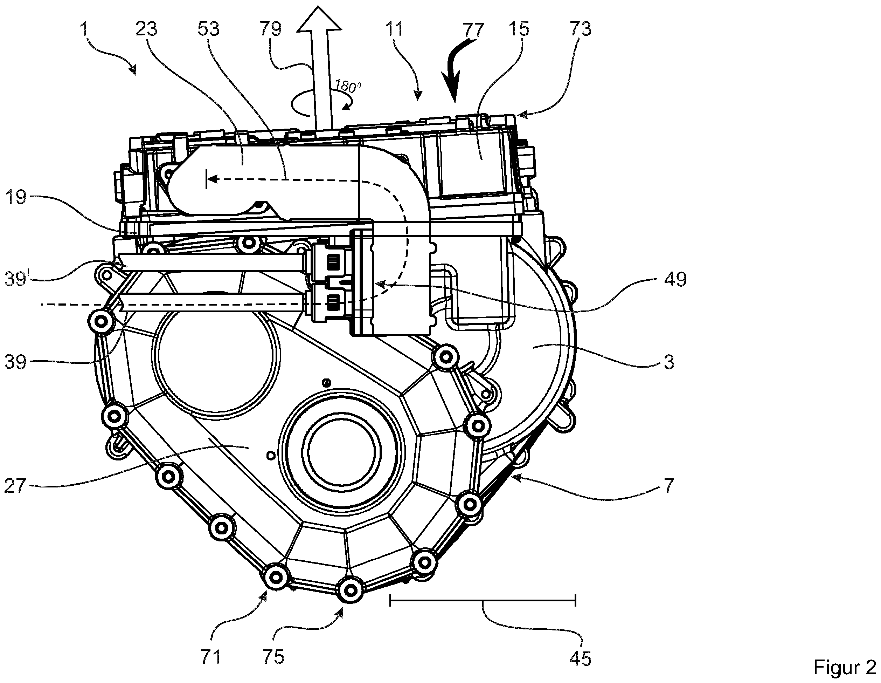

In Figur 1 und Figur 2 der US 2019/061 504 A1 (Anmelderin: NIO USA, Inc.; Veröffentlichungstag: 28.02.2019) werden Kraftfahrzeuge gezeigt, die mit Einzelradantrieben ausgestattet sind. Ein Beispiel für einen räumlichen Aufbau solcher Antriebe geht aus Figur 7A hervor, deren Elektromotoren voreinander angeordnet sind. Ein Inverter soll zwischen den mit den Elektromotoren verbundenen Getrieben montiert sein. Das Getriebe soll ein epizyklisches Reduktionsgetriebe aufweisen, bei dem der Abtrieb über den Planetenträger erfolgt. Die Anordnung soll sich für sog. "torque vectoring" eignen. Außerdem beschäftigen sich die Autoren der US 2019/061 504 A1 mit der Integration dieser Komponenten in einem sog. "Seite-an-Seite-Gehäuse".

Die Patentanmeldung DE 10 2018 103 483 A1 (Anmelderin: Toyoto Jidosha Kabushiki Kaisha; Offenlegungstag: 23.08.2018) beschäftigt sich mit der Bereitstellung eines Antriebskraftregelungssystems für eine Antriebsanordnung mit zwei Elektromotoren, die jeweils ein Rad antreiben sollen. Eine Regelung soll den Schlupf der Räder möglichst gering halten. Außerdem soll in die Regelung eine Antriebskraftübertragungskapazität einer Kupplung einbezogen werden können, die dazu dient, den ersten Motor und den zweiten Motor als eine verbundene Einheit zu betreiben. Die Regelung soll mithilfe von situationsbezogenen Kennfeldern für bestimmte Antriebssituationen, wie z. B. im Falle einer Kurvenfahrt, und mithilfe von einem Drehmomentensensor und mithilfe von einem Gierratensensor durch ein Steuergerät erfolgen. Es sollen eine Parksperre an einer Vorderachse und eine Parksperre an einer Hinterachse vorhanden sein, die geeignet sein sollen, entweder eine Drehung einer zweiten Abtriebswelle oder eine Drehung einer ersten Vorgelegewelle anzuhalten.

In dem Patent EP 2 406 111 B1 (Inhaberin: Nissan Motor Co. Ltd.; Veröffentlichungstag: 01.01.2014) wird eine Parksperrenvorrichtung beschrieben, mit der sichergestellt werden soll, dass diese nicht während einer Fahrt des die Vorrichtung aufweisenden Fahrzeugs aktiviert werden kann. Dies soll durch eine Kraftbegrenzung für ihren Aktuator erreicht werden, der eine Klinke gegen ein Parksperrenrad drückt. Außerdem sollen zum Schutz einer rechten Parksperre und zum Schutz einer linken Parksperre eine Rotation eines rechten Rads und eine Rotation eines linken Rads separat sensorisch überwacht werden.

Aus der US 2018/236 982 A1 (Anmelderin: Honda Motor Co., Ltd.; Veröffentlichungstag: 23.08.2018) geht ein Antriebssystem mit zwei Elektromotoren hervor, einem linken Motor und einem rechten Motor, bei dem die Rotationen zweier Park-Zahnräder mittels einer Festsetzeinheit derart zu beeinflussen sein sollen, dass eine Fortbewegungsstrecke nach Betätigung der Festsetzeinheit möglichst gering ausfällt. Eines der beiden Park-Zahnräder soll einem Antriebspfad des linken Elektromotors und das andere der Park-Zahnräder soll dann einem Antriebspfad des rechten Elektromotors zugeordnet sein. Die Zahnräder sollen unterschiedliche maximale Radien haben, während jedoch die Zähne beider Zahnräder von einem gleichen Kreisradius herausstehen sollen. Die US 2018/236 982 A1 beschäftigt sich vorrangig mit den Parksperrenzahnrädern und scheint alles andere bei einem Kfz-Antrieb mit Elektromotoren aus den Augen verloren zu haben bzw. auszublenden.

Die EP 2 719 591 A1 (Anmelderin: Nissan Motor Co., Ltd.; Veröffentlichungstag: 16.04.2014) beschäftigt sich überwiegend mit der Steuerung von Parksperren. Für den Fall, dass sich ein Fahrzeug noch bewegt, d. h., nicht absolut still steht, ist vorgesehen, dass zusätzlich zu einem ersten Parksperrenmechanismus noch ein zweiter Parksperrenmechanismus, der sich an einem anderen Rad befinden soll, aktiviert wird. Hingegen wird bei einem vollständig stehenden Fahrzeug die Aktivierung eines einzigen Parksperrenmechanismus als ausreichend erachtet, wodurch Energie für die Betätigung der Parksperre eingespart werden kann. Wie in Figur 1 gezeigt ist, soll der Fahrzeugantrieb über Radnabenmotoren an Hinterrädern des Fahrzeugs erfolgen. Die Parksperrenmechanismen sollen die Rotationsachsen der Radantriebsmotoren bezüglich dem Fahrzeugkörper festsetzen. Ein Steuergerät der Parksperre soll eine Straßenneigung bei der Aktivierung der Parksperre berücksichtigen.

Die DE 10 2011 080 236 A1 (Anmelderin: ZF Friedrichshafen AG; Offenlegungstag: 07.02.2013) beschäftigt sich mit einem Elektromotoreinzelradantrieb für ein Kraftfahrzeug, der als radnah bezeichnet wird. Anhand von acht Zeichnungen, die von 1 bis 7 durchnummeriert sind, werden sechs verschiedene Platzierungen einer Parksperre an einem Einzelradantrieb mittels Strichzeichnungen vorgeschlagen. Figur 2 zeigt in Darstellung "a)" eine Klinke in einer geöffneten Parksperrenposition und in Darstellung "b)" eine Klinke in einer geschlossenen Parksperrenposition. Eine solche klassische Parksperre ist mit einer Klinke und einem Parksperrenrad realisiert. Die Figuren 1 und 3 bis 7 zeigen einen Ausschnitt aus einer Verbundlenkerachse, bei dem unter einem Torsionsprofil eine E-Motor-Getriebe-Einheit mit einem E-Motor und zwei Getriebestufen, nämlich einem Planetengetriebe und einer Ritzel-Stirnrad-Anordnung, in einer Schnittansicht dargestellt sind. In diesen Figuren ist die Parksperre schematisch an verschiedenen Positionen der Antriebsanordnung eingezeichnet, und zwar an einer Antriebswelle des Motors, einem Steg, einer Verbindungswelle, im Bereich einer Ritzel-Stirnrad-Anordnung oder an einer Ausgangswelle.

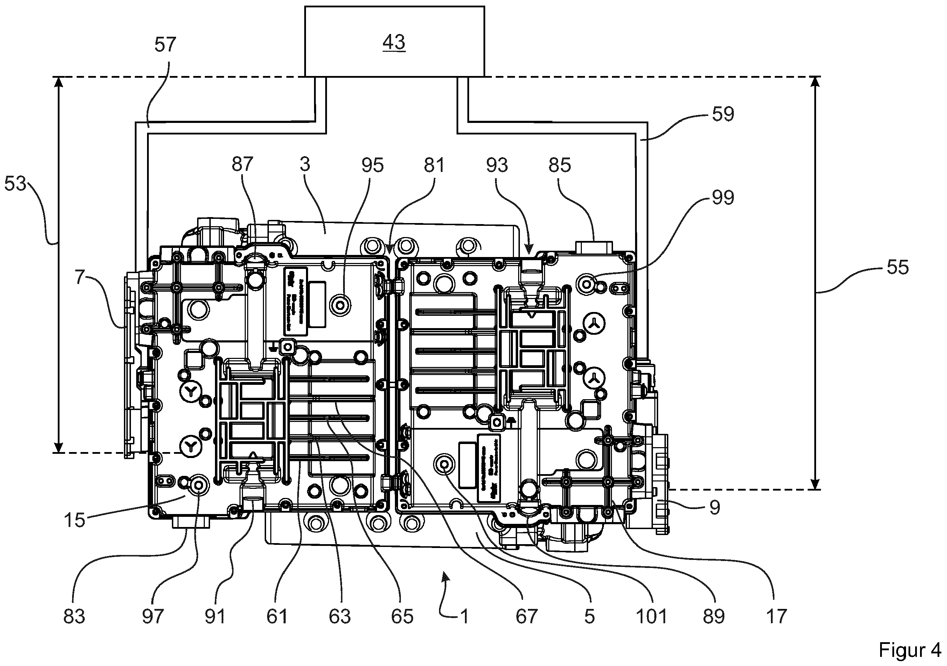

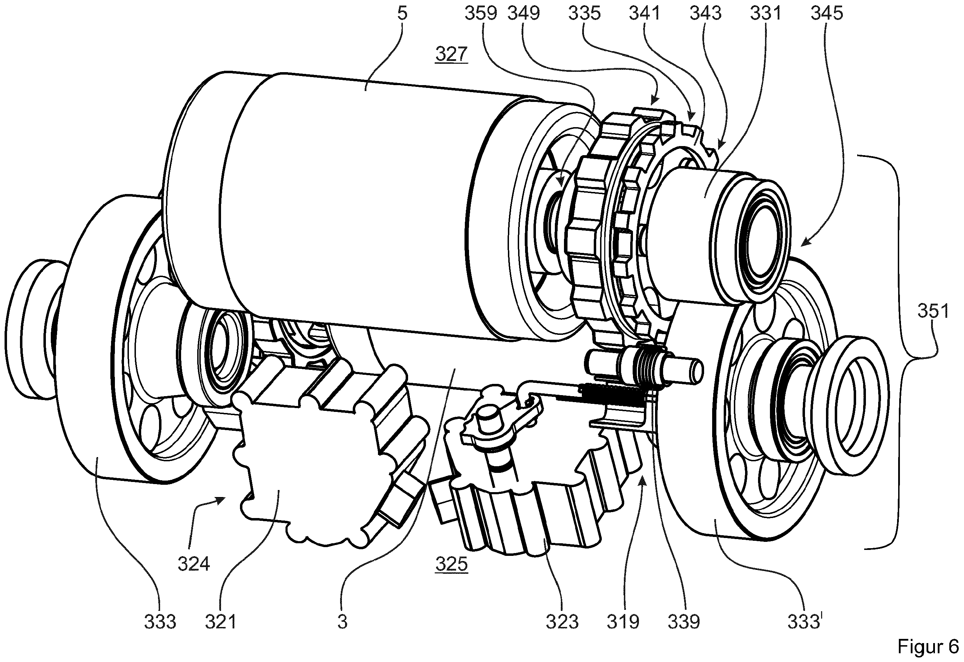

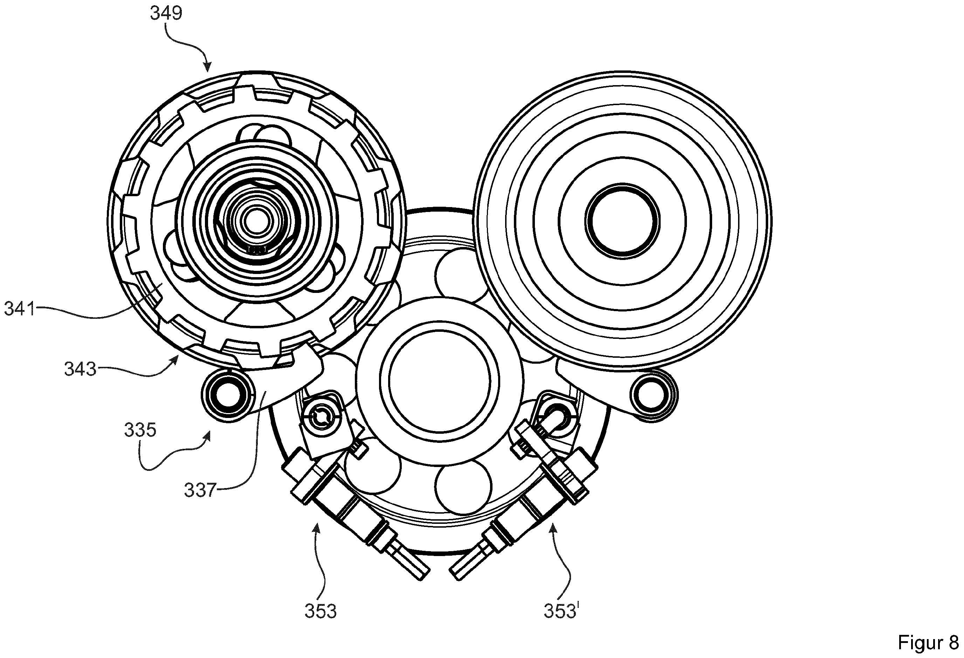

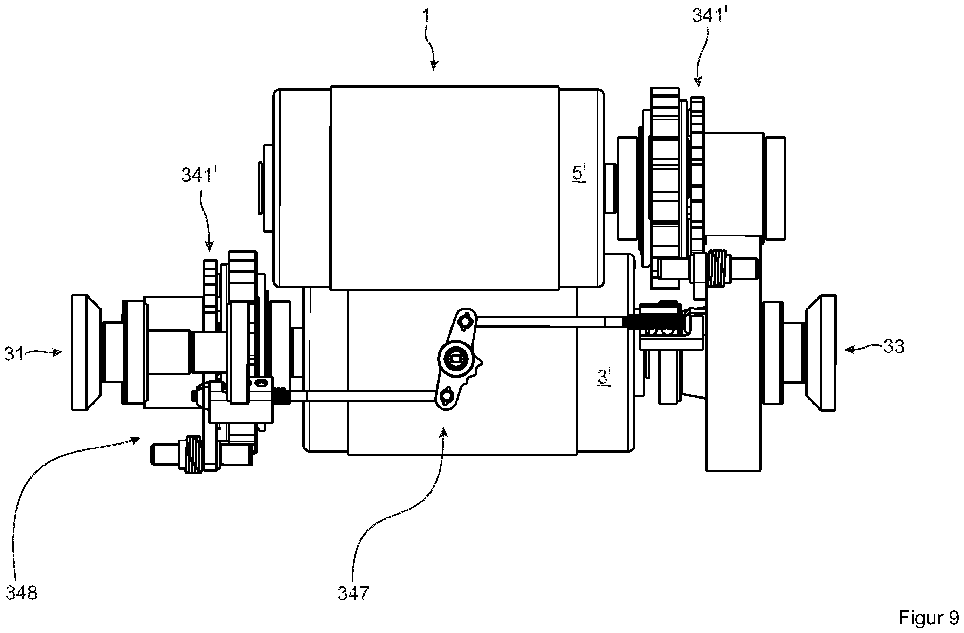

Die Patentanmeldung JP 2009-120 126 A (Anmelderin: Mazda Motor Corp.; Veröffentlichungstag: 04.06.2009) zeigt in den Figuren 4, 5, 7 und 14 einen blockartig ausgebildeten Doppel-Motor, wobei zu jedem Motor ein Getriebe gehört. Die beiden Motorblöcke dürften koaxial nebeneinander angeordnet sein und jeweils von einem Inverter versorgt werden. In Figur 8 ist eine Parksperreneinheit dargestellt. Ein eine Klinke aufweisender Sperrhebel soll in ein Zahnrad eines Planetengetriebes (vgl. Figur 6(b)) eingreifen können. Gemäß Figur 9 sollen die Parksperren beider Getriebe mit einem Pantograph synchronisiert betätigt werden können. Als Alternative wird anhand von Figur 11 vorgeschlagen, ein Fahrzeugsteuergerät in Verbindung mit einem Aktuator zur Betätigung einer einzelnen Parksperre vorzusehen. Ein besonderes Gestaltungsmerkmal der Motorenanordnung besteht darin, dass zwischen den beiden Motoren ein Abgasrohr durchgeführt sein soll.

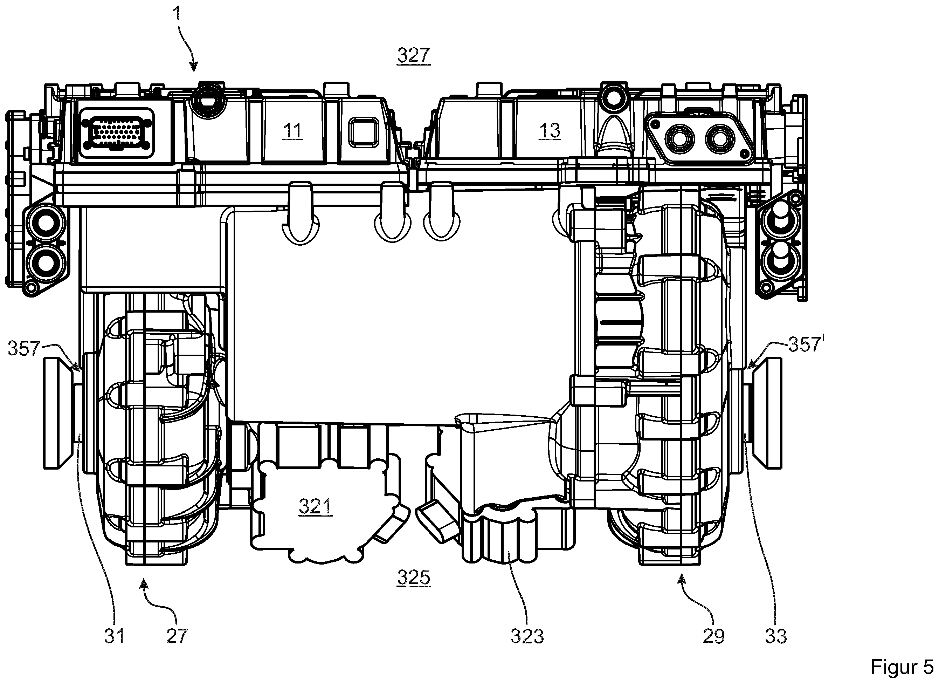

Die Patentanmeldung US 2019/0 131 851 A1 (Anmelderin: NIO USA, Inc.; Veröffentlichungstag: 02.05.2019), die dem Gegenstand des Anspruchs 1 am nächsten kommt, beschäftigt sich in verschiedenen Ausführungsbeispielen schwerpunktmäßig mit der Kühlung eines elektrischen Antriebs für Kraftfahrzeuge, insbesondere seines Inverters oder, falls mehrere Inverter zu dem Antrieb gehören, mit der Kühlung seiner Inverter. In dem Dokument gibt es also auch Ausführungsbeispiele, bei denen der Inverter als ein Dual-Inverter ausgebildet sein soll. Der elektrische Antrieb soll mit zwei Motoren ausgestattet sein. Über den Motoren und zwischen den Getrieben des Antriebs kann der eine Inverter angeordnet sein, der zu kühlen ist. Das Kühlmedium könne laut US 2019/0 131 851 A zwischen einem Kühlmitteleinlass und einem Kühlmittelauslass über unterschiedliche verzweigende Pfade geführt sein. Wie der Figur 5F zu entnehmen ist, ist das Invertergehäuse den Rundungen der Antriebsmotorgehäuse nachgeformt. Zum Einbau des Antriebs in das Trägerfahrzeug macht die US 2019/0 131 851 A1 nicht viele Angaben; sie redet nur ganz allgemein von einem Rahmen. Eine feste Verbindung zwischen der Antriebseinheit und dem Fahrzeugrahmen soll eine effiziente Übertragung von Antriebsleistung auf die Antriebsräder ermöglichen. Der Fahrzeugrahmen soll beispielsweise aus einem Polymer gefertigt sein.

Die zuvor genannten Druckschriften enthalten auch allgemein bekannte Zusammenhänge zwischen Einzelradantrieben und dem baulichen Arrangement der Einzelkomponenten.

### Aufgabenstellung

Wie gesagt, führt die Entwicklung von einem Elektroantriebsstrang mit zwei Einzelradantrieben durch zwei eigenständige Motoren bzw. Elektromaschinen zu erhöhten Anforderungen an den benötigten Bauraum. Zugleich darf aber der Wunsch nach zuverlässigen, sicheren Antrieben, die idealerweise schon konstruktiv realisierte Sicherheiten eingebaut haben, nicht vernachlässigt werden.

Es stellt sich also die Frage, wie es möglich ist, die Attraktivität von elektromotorischen Einzelradantrieben in beengten Bauräumen zu realisieren und trotzdem Rücksicht auf besondere Sicherheitsanforderungen nehmen zu können.

### Erfindungsbeschreibung

Die erfindungsgemäße Aufgabe wird durch einen Antriebsblock nach Anspruch 1 gelöst. Vorteilhafte Weiterbildungen lassen sich den abhängigen Ansprüchen entnehmen.

Kraftfahrzeuge, die elektromotorisch angetrieben werden sollen, benötigen wenigstens eine Elektromaschine, wie z. B. eine Synchronmaschine oder z. B. eine Asynchronmaschine bzw. von diesen grundlegenden Elektromaschinentypen abgeleitete Weiterentwicklungen (Reluktanzmotor, Radnabenmotor, Spaltrohrmotor, Widerstandsläufer, Ferrarismotor usw.). In der Regel wird ein mit einer im Vergleich zu einer Radgeschwindigkeit mit einer höheren Drehzahl drehender Motor als Antriebsmotor in einem Personenkraftwagen verwendet, dessen Drehzahl durch ein an der Ausgangswelle des Motors angesiedeltes Getriebe auf eine (angemessene) Raddrehzahl reduziert wird, z. B. in einem Drehzahlbereich zwischen 0 U/min bis weniger als 2.000 U/min, in einer alternativen Ausgestaltung bis zu einer maximalen Drehzahl von ca. 2.600 U/min.

Lässt sich jedes Rad einer Achse eines Kraftfahrzeugs durch einen eigenen Motor antreiben, so kann von einem Einzelradantrieb gesprochen werden, wobei es - bekanntermaßen bzw. siehe oben - auch Getriebeanordnungen gibt, durch die (wahlweise bzw. in Abhängigkeit einer Schaltstellung) einer der Motoren oder sogar beide Motoren als Achsantriebe anstelle von Einzelradantrieben geschaltet werden können. Vorteilhafterweise treibt ein solcher Antriebsblock mit zwei Elektromaschinen, d. h. mit einer ersten Elektromaschine und mit einer zweiten Elektromaschine, entweder eine komplette Achse eines Kraftfahrzeugs oder jeweils eine Elektromaschine treibt ein einzelnes Straßenrad an der anzutreibenden Achse des Kraftfahrzeugs. Wie gesagt, können auch umschaltbare Mischformen an einer Achse eines Kraftfahrzeugs vorhanden sein, die, je nach Schaltzustand, z. B. eines aufschaltbaren Differentials, entweder als Einzelradantrieb oder als Achsantrieb genutzt werden können. Treibt jeweils eine Elektromaschine ein Straßenrad des Kraftfahrzeugs an, kann über eine Ansteuerung der Elektromaschinen, z. B. über einen Inverter (bzw. Wechselrichter bzw. Umrichter), insbesondere durch eine Frequenzsteuerung, ein "torque vectoring" (eine Gier-Winkelsteuerung des Kraftfahrzeugs) betrieben werden.

Besonders vorteilhaft ist es, wenn die einzelnen Komponenten eines (Teil-)Antriebs mit den gleichartigen Komponenten eines zweiten (Teil-)Antriebs ineinander geschoben, d. h. aufeinander zubewegt angeordnet sind, was auch mit den Worten "verschachtelt angeordnet" bezeichnet werden kann. Hierbei ist die Möglichkeit gegeben, jeden (Teil-)Antrieb eigenständig mit sämtlichen Komponenten für das Antreiben eines Einzelrades oder sogar für das Antreiben einer Kfz-Achse auszustatten.

Lassen sich die einzelnen Komponenten des Antriebsblocks in einem kompakten Block arrangieren, so steht die (theoretische) Möglichkeit zur Verfügung, den Antriebsblock in seinen Abmessungen an den Abmessungen und an der Form einer Verbrennungskraftmaschine mit den an ihr angeordneten Aggregaten auszurichten. Der Formfaktor entspricht (im Wesentlichen) einem Verbrennungsmotor mit seinen Anbauaggregaten und gegebenenfalls seiner Kapselung. Solche Motoren lassen sich in einer Längsfahrzeugrichtung einbauen, z. B. in einem Motorraum unterhalb einer Motorhaube. Hierbei kann der Antriebsblock für einen Quereinbau in einem Kraftfahrzeug vorgesehen sein. Als Quereinbau des Antriebsblocks kann eine Orientierung bezeichnet werden, bei der die Radantriebswellen, die aus dem Block herausstehen, auf die anzutreibenden Räder gerichtet sind; es gibt keine Umlenkung um 90°, um von den Radantriebswellen zu den Rädern der Achse zu gelangen.

Treibt die erste Elektromaschine ein erstes Einzelrad an, bedarf es, aufgrund der erhöhten Drehzahl der Elektromaschine bzw. der für einen Radantrieb zu hohen Winkelgeschwindigkeit, eines ersten (Untersetzungs-)Getriebes. Treibt eine zweite Elektromaschine ein zweites Einzelrad an, so bedarf es, aufgrund der im Vergleich zum Straßenrad höheren Drehzahl der Elektromaschine, eines zweiten Getriebes (in das Langsame). Werden die Getriebe jeweils stirnseitig auf der ersten Elektromaschine bzw. auf der zweiten Elektromaschine befestigt, so ergibt sich ein (Teil-)Block aus einer Elektromaschine und einem dazugehörigen Getriebe. Werden die beiden Elektromaschinen bezüglich ihrer Längserstreckung, z. B. bezüglich ihrer Rotorachsen bzw. ihrer rotierenden Achsen, parallel und bezüglich ihrer Gehäuse hintereinander angeordnet, ergibt sich ein Block aus zwei L-förmigen Motor-Getriebe-Einheiten.

Handelt es sich bei den Elektromaschinen um Motoren, die mit einer Wechselspannung, entweder einphasig oder mehrphasig, wie z. B. dreiphasig, betrieben werden, so bedarf es als weitere Komponente des Antriebsblocks wenigstens eines Inverters; vorzugsweise werden jedoch zwei Inverter eingesetzt, je ein Inverter pro Antrieb, gebildet aus Elektromaschine und Getriebe. Die beiden Inverter werden vorteilhafterweise auf dem doppelt gestalteten L-förmigen Block aus zwei Elektromaschinen und aus zwei an den zylinderförmigen Enden des Gehäuses der Elektromaschinen angesiedelten Getrieben platziert. Hierbei ist der Antriebsblock für einen Einbau vorgesehen, bei dem idealerweise in einem unteren Bereich die Elektromaschinen und die Getriebe platziert sind, während die Inverter oberhalb der Antriebswellen der Elektromaschinen, d. h. bodenabgewandt angeordnet sind. Die schwereren Elektromaschinen bilden - in der Einbaulage (wenn der Antriebsblock für die Montage in einem Kraftfahrzeug ausgerichtet worden ist (der Hochzeit mit dem Chassis)) - die Basis des Antriebsblocks. Die leichteren, häufig thermisch empfindlicheren, zum Teil auch mechanisch fragileren, Inverter befinden sich in einem Bereich, der im Vergleich zu den Elektromaschinen bodenferner angesiedelt ist.

Ein Antriebsblock eines elektromotorischen Kfz-Antriebs für zwei Einzelradantriebe einer Achse hat zwei Elektromaschinen, jeweils mit einer parallelen Rotorachse, und stirnseitig jeweils ein Getriebe. Die Einzelradantriebe bzw. die Elektromaschinen sind für einen Einbau in einer Längsfahrzeugrichtung zumindest teilweise deckend zueinander angeordnet. Je ein Inverter an einer in Einbaulage höchsten Stelle des Antriebsblocks nebeneinander angeordnet, dient der Ansteuerung einer der beiden Elektromaschinen. Mindestens einer der Inverter ist als flacher, nahezu quadratischer Kasten so ausgebildet, dass er ungefähr eine Hälfte einer Oberseite des Antriebsblocks abdeckt. Die beiden Elektromaschinen sind bezüglich ihrer Gehäuse hintereinander angeordnet. Somit hat der Antriebsblock zwei Antriebe mit eigenen Getriebegehäusen. Die Elektromaschinen sind für einen Einbau in einer Kraftfahrzeugquerrichtung vorgesehen.

Es kann auch gesagt werden, der Antriebsblock ist quer eingebaut, was z. B. bei einem Hinterachsantrieb an der Kraftfahrzeugquerrichtung zu erkennen ist.

Bei einem Antriebsblock in der Einbaulage trennt eine erste Trägerplatte den ersten Inverter mit seinem kastenartigen Gehäuse von den darunter liegenden beiden Komponenten Elektromaschine und Getriebe. Der erste Inverter bildet mit seiner Oberseite die höchste Stelle. Durch das Gehäuse wird die tiefste Stelle gebildet.

Es hat sich als günstig herausgestellt, wenn wenigstens einer der Inverter ein flacher Kasten ist, ganz bevorzugt beide Inverter, insbesondere bei einem mit zwei Elektromaschinen aufgebauten Antriebsblock, flache Kästen sind, die z. B. quadratisch ausgebildet sein können. Jeder Kasten kann eine solche Abmessung haben, dass er ungefähr die Hälfte einer Oberseite des Antriebsblocks ausbildet. Der erste Kasten, also der erste Inverter, bedeckt z. B. die rechte Seite der beiden hintereinander angeordneten Elektromaschinen als überspannende flache Einheit. Der zweite Inverter kann neben dem ersten Inverter angeordnet sein. Der zweite Inverter kann genauso beide Elektromaschinen von oben abdecken. Der zweite Inverter ist idealerweise mit den gleichen Abmessungen ausgestattet wie der erste Inverter. Die beiden Inverter bilden die nach oben hin begrenzende Abdeckung durch ihre oberen Gehäuseschalen.

Nachfolgend werden vorteilhafte Ausgestaltungen und Weiterbildungen dargelegt, die für sich gesehen, sowohl einzeln als auch in Kombination, ebenfalls erfinderische Aspekte offenbaren können.

Entspricht der Antriebsblock in seinen maximalen Abmessungen den Breiten, Höhen und/oder Längen einer Verbrennungskraftmaschine, die für den Antrieb eines Kraftfahrzeugs konzipiert ist, so bietet sich die Möglichkeit, eine fertig entwickelte Karosserie weiterhin zu verwenden und den Antriebsblock als Substituent für einen Antrieb mit einer Verbrennungskraftmaschine einzusetzen. Der für eine Verbrennungskraftmaschine vorgesehene Bauraum kann von dem Antriebsblock genutzt bzw. beansprucht werden. Weitere Komponenten, die sonst noch im Motorraum verbaut sein können, wie eine Hilfslenkung bzw. eine Lenkunterstützung können weiterhin im Motorraum unverändert beibehalten werden.

Die Getriebe, also das erste Getriebe und das zweite Getriebe, können durch mehrere Stirnradstufen oder auch durch ein Planetengetriebe realisiert sein. Natürlich ist es auch möglich, eine Stufe als Planetengetriebe zu realisieren und eine andere Stufe als Stirnradstufe zu realisieren.

Jede Antriebskombination, die sich aus einem Inverter, einer Elektromaschine und einem Getriebe zusammensetzt, stellt einen eigenen Antrieb dar. Der Antrieb hat eine Parksperre. Die Parksperre ist nur für diesen einen Antrieb zuständig. Jeder Antrieb (bzw. Teilantrieb) ist jeweils mit einer eigenen Parksperre zum Blockieren einer Abtriebswelle, die aus dem Antrieb auf einen Radantrieb herausführt, ausgestattet.

Die Parksperrenaktuatoren sind vorzugsweise in einem bodennahen Bereich des Antriebsblocks platziert. Innerhalb des Antriebsblocks sind die Parksperrenaktuatoren in einem dem Boden zugewandten Bereich angesiedelt. Mit anderen Worten, die Parksperrenaktuatoren können vorteilhafterweise in einem unteren Bereich des Antriebsblocks angesiedelt werden. Die Parksperren können zwischen den ausgangsseitig angeordneten Getrieben, insbesondere in einem bodennahen Bereich angesiedelt werden.

Die Parksperren sind dafür da, in einen Sperrzustand zu gelangen, wenn der Antrieb und somit das Fahrzeug von einem Wegrollen gehindert werden soll.

In einer ersten, vorteilhaften Ausgestaltung gehören zu dem Antriebsblock zwei Aktuatoren, die dafür da sind, jeweils eine eigene Parksperre pro (Teil-)Antrieb zu betätigen.

In einer alternativen Ausgestaltung kann anstelle von zwei Parksperrenaktuatoren auch nur vorgesehen sein, dass ein Parksperrenaktuator beide Parksperren synchron bzw. simultan, d. h. zum gleichen Zeitpunkt betätigen kann.

Die Parksperrenaktuatorik, sowohl eine gemeinsame als auch mehrere eigenständige, kann zwischen den Getriebegehäusen sitzen.

Der Sperrzustand kann durch eine Rotationshemmung hervorgerufen werden. Die Rotationshemmung kann in dem Getriebe bewirkt werden. Jedes Getriebe hat seine eigene Parksperre.

Vorteilhafterweise ist jede der Parksperren so gestaltet, dass sie in einem Sperrzustand in einem Planetenträger eingreifend eine Planetengetriebestufe des Getriebes rotatorisch fixiert. Im Sperrzustand übt die jeweilige Parksperre eine Rotationshemmung aus.

Es ist möglich, dass die Parksperre an verschiedenen Stellen angreift.

In einer Ausgestaltung fixiert die Parksperre ein Ausgangszahnrad.

In einer Ausgestaltung fixiert die Parksperre eine Eingangswelle des Getriebes.

In einer Ausgestaltung blockiert die Parksperre das kleinere Ritzel von zwei eine Übertragungsstufe bildenden Ritzeln.

In einer Ausgestaltung fixiert die Parksperre ein Abtriebsrad der Zahnradgetriebestufe. Selbst an dieser Stelle reicht es, wenn ein Drehmoment von weniger als z. B. 3.000 Nm gesperrt werden kann, wie z. B. 2.200 Nm.

Die jeweilige Parksperre kann durch ihren Aktuator als hydraulisch zu betätigende Parksperre realisiert sein. Auch ist es möglich, dass die Parksperre durch ihren Aktuator als eine elektromotorisch betätigte Parksperre arbeitet.

Eine günstige Ausgestaltung ist eine Klinkensperre, d. h. eine Parksperre, die durch eine Klinke in ihren fixierten bzw. in ihren gesperrten Zustand versetzbar ist.

Außerdem ist es vorteilhaft, wenn für das Lösen der Parksperre die Parksperre einen Energiespeicher, z. B. in Gestalt einer starken Ringfeder, aufweist. Alternative Möglichkeiten bieten sich durch Druckfedern, Kegelfedern oder Tonnenfedern.

Vorteilhafterweise greift eine Klinke der Klinkensperre in ein Ringrad eines Planetengetriebes ein. Das Planetengetriebe kann an seiner abtreibenden Seite, z. B. an dem Planetenträger, ein Ringrad angeschlossen haben (per Steckverbindung, geschweißt, genietet oder dergleichen), das die Aufgabe eines Sperrrads übernimmt. Durch die eingreifende Klinke kann eine Fixierung des Getriebes bewirkt werden. Hierfür kann an dem Ringrad eine Außenverzahnung vorhanden sein, z. B. in Gestalt eines Außenzahnkranzes. Das Ringrad ist ein weiteres Bauteil neben dem Planetengetriebe.

Das Getriebe hat unterschiedlich große Ritzel. Vorteilhafterweise wird ein kleineres der zur Verfügung stehenden Ritzel des Getriebes gewählt, um in dem kleineren Ritzel die Bewegungshemmung bei einer eingelegten Parksperre zu verwirklichen.

Das Getriebe kann sich in einer Weiterbildung aus einer Planetengetriebestufe und aus einer Zahnradgetriebestufe zusammensetzen, bei denen die eine Stufe der anderen Stufe folgt. Die beiden Getriebestufen sind nacheinander gereiht.

Beide Getriebestufen haben Übersetzungen, um die Drehzahl zu reduzieren.

Der Antriebsblock kann durch Klinken gesperrt werden, die passstiftgelagert sind. Die Klinken liegen auf Passstiften, z. B. auf Stiften, die weniger als 15 mm dick sind, z. B. nur 10 mm dick sind. Ein solcher Passstift kann sehr kurz sein, z. B. weniger als 70 mm. So ist es möglich, die gesamte Parksperre mit ihrem Aktuator in den knappen Bauraum einzupassen.

Die Parksperren können stangengesteuert sein. Durch eine Stangensteuerung kann der Parksperrenaktuator an einer anderen Stelle angeordnet werden als die Parksperre (selbst).

Eines der Getriebe kann mehrere Getriebestufen umfassen (aber auch beide Getriebe können je mehrere Getriebestufen umfassen), z. B. zwei Getriebestufen, von denen eine Getriebestufe ein Planetengetriebe ist und eine Getriebestufe ein Zahnradgetriebe ist. Beide Getriebestufen reduzieren die Drehgeschwindigkeit bzw. die Drehzahl, es sind drehzahlreduzierende Getriebe, die Übersetzungen mit einer Übersetzungszahl im Bereich von 50 bis 100 umsetzen.

Die zuvor dargestellten Kombinationen und Ausführungsbeispiele lassen sich auch in zahlreichen weiteren Verbindungen und Kombinationen betrachten.

Der Antrieb kann vorteilhaft mit je einer Parksperre zum Blockieren einer Abtriebswelle ausgestattet sein. In jeder Antriebskombination ist somit ein Sperrzustand herstellbar. Dabei sitzt eine Parksperrenaktuatorik in einem bodennahen Bereich zwischen den Getrieben.

So ist es u. a. möglich, das Getriebegehäuse und das Elektromaschinengehäuse als Gesamtgehäuse auszugestalten. Eine erste Komponente ist in diesem Fall der elektromotorische Antrieb aus Elektromaschine und Getriebe. Eine zweite bzw. weitere Komponente ist der dazugehörige Inverter.

Die Klinkensperre kann mit und auch ohne Federn arbeiten. Eine Feder kann zur leichteren Auslösung der Klinkensperre Teil des Hebelmechanismus sein.

Nachfolgend werden weitergehende interessante Aspekte für einen zuvor umrissenen Antriebsblock vorgestellt.

Die Unterseite eines Inverters kann dafür gestaltet sein, auf einer Trägerplatte angeordnet zu werden. Die Trägerplatte kann eine flache Abdeckplatte sein, die das Brückenelement über die beiden Elektromaschinen darstellt. Die Trägerplatte ruht als flache Abdeckplatte auf beiden Elektromaschinen. Vibrationen der Elektromaschinen oder des Antriebsblocks werden, wenn die Trägerplatte ausreichend massiv gestaltet ist und zugleich günstig schwingungstechnisch gelagert ist, abgemildert, sodass die Elektronik des Inverters bzw. die beiden Elektroniken der beiden Inverter nur verringerte (idealerweise gar keine) Schwingungen und Vibrationen erleiden.

Für jeden Inverter kann es - in einer vorteilhaften Ausgestaltung - einen Kabelsteckadapter geben. Die beiden Kabelsteckadapter, von denen jeweils ein Kabelsteckadapter für den Anschluss zu einem Inverter gestaltet ist, sind in einer vorteilhaften Weiterbildung voneinander abweichend. Ein Kabelsteckadapter führt auf einen Elektroanschluss des Inverters, an dem der Kabelsteckadapter angebracht ist.

Am Rande bemerkt, die zuvor aufgeführten Komponenten, wie erste Elektromaschine, wie zweite Elektromaschine, wie erstes Getriebe, wie zweites Getriebe, wie erster Inverter, wie zweiter Inverter, können jeweils als identische Teile ausgeführt werden. Es kann auch gesagt werden, die Elektromaschinen sind als Gleichteile ausgeführt. Gleichartig kann auch gesagt werden, die Getriebe sind als Gleichteile ausgeführt. Genauso kann gesagt werden, dass die Inverter Gleichteile sind. Hiervon unterscheiden sich, in einer günstigen Weiterbildung, die Kabelsteckadapter, durch die unterschieden wird, ob der erste (Teil-)Antriebsblock ein linker oder ein rechter (Teil-)Antriebsblock ist und ob der zweite (Teil-)Antriebsblock ein rechter oder ein linker (Teil-)Antriebsblock ist.

Ein solcher Kabelsteckadapter kann für die seitliche Platzierung am Inverter gestaltet sein. Durch den Kabelsteckadapter wird bestimmt, wo ein Stecker seitlich zu dem Inverter positioniert wird. Der Inverter hat eine, wie oben angesprochen, flache, aber eine (gewisse) Länge und eine (gewisse) Breite abdeckende Form. Somit hat der Inverter eine Längserstreckung bzw. eine Breite, die idealerweise (im Wesentlichen) der Breite der beiden nebeneinander bzw. versetzt zueinander angeordneten Elektromaschinen - im Sinne einer Gesamtbreite - entspricht. Der Kabelsteckadapter hat also eine Breite, die der Breite der beiden Elektromaschinen bzw. bei zylindrischen Gehäusen der Elektromaschinen den Durchmessern der Elektromaschinen, wenn diese vollständig nebeneinander liegen, entspricht.

Vorteilhafterweise ist der Kabelsteckadapter dafür vorgesehen, ein Versorgungskabel, das von einem elektrischen Energiespeicher, z. B. von einem Lithium-Ionen-Akkumulator-Paket, eine elektrische Verbindung an den Inverter über den Kabelsteckadapter herstellt, durch einen Stecker anschließbar zu machen, damit der Inverter aus dem elektrischen Speicher elektrisch versorgt werden kann.

Ein Kabelsteckadapter kann auch als Elektroübergabe bezeichnet werden. Jeder Inverter hat einen eigenen Kabelsteckadapter, wobei - in ihren konkreten Ausführungen - der Kabelsteckadapter des ersten Inverters von dem Kabelsteckadapter des zweiten Inverters abweichen kann. Die Steckerpositionierung, die an einer Stelle an der Längserstreckung des Kabelsteckadapters vorhanden ist, ist vorteilhafterweise für die Bildung einer Gesamtlänge zwischen dem Energiespeicher bzw. einer zentralen Energiequelle und dem Eingang des Inverters, einem Elektroanschluss des Inverters, platziert. Vorteilhafterweise hat das Kraftfahrzeug eine einzige zentrale Energiequelle als Energiespeicher.

Auf diese Weise kann eine Strompfadlänge bestimmt werden. Die Strompfadlänge ergibt sich aus der Länge eines Anschlusskabels zwischen Energiespeicher und der Steckerpositionierung des Kabelsteckadapters sowie einer Leitungsführung innerhalb des Kabelsteckadapters. Ist aufgrund von Leitungsführungen innerhalb des Kraftfahrzeugs die eine Länge eines Versorgungskabels an einen der Kabelsteckadapter kürzer als die Länge eines Kabels an den anderen Kabelsteckadaptern, so kann durch eine Leitungsführung innerhalb des Kabelsteckadapters ein Ausgleich bezüglich der (Gesamt-)Länge, bezüglich der Induktivität, bezüglich des Widerstandes und/oder der Signallaufzeiten auf den elektrischen Verbindungen zwischen Energiespeicher und Antriebsblock bewirkt werden. Somit lässt sich ein Ausgleich zwischen unterschiedlichen Längen der unterschiedlichen Anschlusskabel herstellen.

Vorteilhaft ist es, wenn ein Kabelsteckadapter nicht nur eine Position oder einen Stecker aufweist, in den ein Gegenstecker eines Versorgungskabels einsteckbar ist, sondern ein Kabelsteckadapter eine verschiebliche Steckerposition oder mehrere Stecker anbietet. Je nach Leitungsführung oder Länge des Versorgungskabels kann dann einer der mehreren Stecker ausgewählt werden. Bietet der Kabelsteckadapter mehrere Steckerpositionen, kann ein Anschlusskabel an irgendeiner der zur Verfügung stehenden Steckerpositionen angeschlossen werden. Die Stecker oder Steckerpositionen können so ausgeführt sein, dass ein Anschlusskabel wechselweise an die eine oder andere Position oder an den einen oder anderen Stecker angeschlossen werden kann.

Das Getriebegehäuse ist vorteilhafterweise ein elliptisches bzw. einer elliptischen Form nachgebildetes, flaches, längliches Gehäuse, das zudem schräg (in Bezug auf einen Boden bzw. eine Straße) angesiedelt ist. Werden die beiden Elektromaschinen zueinander (leicht) versetzt (in Bezug auf eine Bodenhöhe) angesiedelt, kann zusätzlich benötigte Bauraumlänge für die Getriebe durch Schrägplatzierung der Getriebegehäuse geschaffen werden. Bei einem elliptischen Getriebegehäuse kann einer der Brennpunkte der Ellipse, die durch einen Schraubkranz des Gehäuses geformt ist, eine Stelle für einen Austritt einer Radabtriebswelle sein. Im Bereich des Brennpunktes tritt eine Radabtriebswelle aus dem Getriebegehäuse aus. In diesem Sinne wird als Brennpunkt ein konstruktives Hilfsmittel bei der Bildung der Ellipse verstanden (gem. üblicher Ellipsengeometrie). Eine Ellipse hat (üblicherweise) zwei Brennpunkte und einen Mittelpunkt sowie dazugehörige Halbachsen. Einer der Brennpunkte wird als Austrittsstelle aus dem Gehäuse benutzt. Einer der Brennpunkte kann als Eintrittsstelle für eine Antriebswelle der Elektromaschine genutzt werden. In einem Brennpunkt wird Antriebsleistung in das Getriebe eingebracht, in dem anderen Brennpunkt wird Antriebsleistung aus dem Getriebe ausgebracht.

Jedes Getriebe hat vorteilhafterweise ein eigenes Gehäuse, das dem Getriebe zugehörige Getriebegehäuse. Jedes Getriebe umfasst ein Getriebegehäuse. Ein Getriebe ist mit einem Getriebegehäuse ausgestattet.

Die Getriebegehäuse reichen weiter nach unten als die Elektromaschinen. Im Bereich einer tiefsten Stelle des Antriebsblocks ist ein Getriebe, genauer ein Getriebegehäuse zu finden. Das Getriebegehäuse reicht weiter in einen bodennahen Bereich als jede der Elektromaschinen. Die Elektromaschinen haben ebenfalls eine tiefste Stelle. Diese tiefste Stelle ist aber weiter von dem Boden bzw. der Straße entfernt als die tiefste Stelle eines der Getriebegehäuse.

Vorteilhafterweise flankieren die Getriebe mit ihren unteren Enden einen Bauraum, der sich parallel zu den Elektromaschinen zwischen den Getrieben erstreckt. Die Elektromaschinen können von der Unterseite durch weitere Komponenten eingefasst werden. Die Elektromaschinen liegen in einem mittleren Bereich. Der von den Getriebegehäusen seitlich eingefasste Bauraum wird von den Elektromaschinen nach oben begrenzt.

Die oberste Seite des Antriebsblocks kann mit Kühlrippen ausgestattet sein. Die Kühlrippen befinden sich, sofern die Inverter die höchsten Bauteile des Antriebsblocks sind, an den Invertern. Während Elektromaschinen nicht nur mechanisch häufig robuster als Inverter sind, sondern für höhere Betriebstemperaturen auch deutlich unproblematischer gestaltet werden können, sind viele elektronische Bauteile, die in einem durch ein Gehäuse gekapselten Inverter einzubauen sind, thermisch empfindlicher; bzw. die Bauteile besitzen nur eine geringere maximale Betriebstemperatur. Werden die Kühlrippen an der Oberseite des Antriebblocks angesiedelt, so kann mit Hilfe der Luftkonvektion, z. B. durch einen Kraftfahrzeugventilator (z. B. einem Viskolüfter oder einem anderen Kupplungslüfter), eine Temperaturabsenkung der Inverter bewirkt werden.

Die Komponentenkombination aus Elektromaschine und Getriebe erinnert in einer günstigen, besonders kompakten Ausgestaltung an den Großbuchstaben "L"; die Anordnung der beiden Komponenten "Elektromaschine" und "Getriebe" zueinander kann auch als L-förmig bezeichnet werden. Der Inverter erinnert an einen Block. Es können identisch gestaltete Inverter als erster Inverter und als zweiter Inverter Teil des Antriebsblocks werden, wenn einer der beiden Inverter im Vergleich zu dem anderen Inverter an seiner Gehäusehochachse gedreht worden ist und somit beide Inverter spiegelbildlich (insbesondere in Bezug auf eine Spiegelsymmetriestelle) zueinander angesiedelt werden. Idealerweise sind beide Gehäuse der Inverter ein wenig voneinander beabstandet angeordnet, sodass sich eine Trennfuge zwischen den Gehäusen der Inverter ausbildet. Der Punkt für die punktsymmetrische Spiegelung des einen Inverters auf den anderen Inverter kann in der Mitte dieser Trennfuge platziert sein.

Besonders vorteilhaft ist eine Platzierung der Inverter auf dämpfenden Befestigungspunkten, z. B. auf dämpfenden Lagern. Die Inverter können Teil des Antriebsblocks sein und trotzdem vibrationsmäßig von den rotierenden Elektromaschinen entkoppelt sein. Eine dämpfende Aufhängung sichert die ruhige Ortslage jedes Inverters.

Werden die einzelnen (Teil-)Antriebsblöcke miteinander verglichen, so hat jeder (Teil-)Antriebsblock einen eigenen Elektroanschluss, idealerweise einen eigenen Kühlkreislaufeingang, idealerweise einen eigenen Kühlkreislaufausgang und idealerweise Befestigungspunkte, die spiegelbildlich an dem anderen (Teil-)Antriebsblock wiederzufinden sind. Somit sind die Komponenten des Antriebsblocks miteinander verbunden. Beide (Teil-)Antriebsblöcke sind so gestaltet, dass sie aufeinander zugeschoben einen Gesamtblock bilden, der in seinen Abmessungen einer (üblichen) Verbrennungskraftmaschine eines, insbesondere Klein-Kraftfahrzeuges, entspricht.

Die zuvor behandelten Antriebseinheiten, die blockartig aus zwei Einzelradantrieben zusammengesetzt sind, können auch mit den folgenden Worten beschrieben werden.

Der Antriebsblock ist vorteilhafterweise dafür ausgelegt, dass jedem angetriebenen Straßenrad ein Drehmoment von einer eigenen Elektromaschine zuführbar ist. Von einem eigenen Antrieb, insbesondere eines einzelnen Straßenrads, kann gesprochen werden, wenn, entweder unter Verwendung eines Inverters oder ohne Inverter, die zum Bewegen des Fahrzeugs vorhandenen Elektromaschinen individuell mit einer vorzugsweise unterschiedlichen Antriebsleistung aus einem elektrischen Speicher versorgbar sind.

Eine Rotation der Elektromaschine wird zur Bereitstellung eines angeforderten Drehmoments für ein Straßenrad jeweils in einem im Drehmomentenfluss zwischen dem Elektromotor und dem Straßenrad angeordneten Getriebe untersetzt.

Der Antriebsblock ist für den Einbau in einem Kraftfahrzeug bauraumeffizient bzw. möglichst kompakt ausgestaltet.

Das Kraftfahrzeug hat eine Längsfahrzeugrichtung, die sich von einem Vorderrad des Fahrzeugs zu einem Hinterrad des Fahrzeugs erstreckt (und darüber hinaus verläuft). Die Längsfahrzeugrichtung kann sich - ohne Präferenz für die eine oder die andere Ausrichtung - von der Fahrzeugfront zum Fahrzeugheck oder von dem Fahrzeugheck zur Fahrzeugfront erstrecken, je nachdem, welche Fahrtrichtung zu betrachten ist. Entlang einer Längsfahrzeugrichtung, die auch als Fahrzeuglängsrichtung bezeichnet werden kann, und ausgerichtet an einer die Längsfahrzeugrichtung schneidenden Querfahrzeugrichtung, die auch als Fahrzeugquerrichtung bezeichnet werden kann, können eine Fahrzeuglängsachse und/oder eine Fahrzeugquerachse zentral in das Fahrzeug "gelegt werden", um hierdurch Konstruktionshilfen zu bilden. Die Konstruktionshilfen bieten für die Anordnung der Komponenten des (Teil-)Antriebs Bezüge. Bei einem Fahrzeugquereinbau erstreckt sich z. B. eine Getriebewelle, wie die Getriebeeingangswelle und/oder die Getriebeausgangswelle, die auch als eine Abtriebswelle bezeichnet werden kann, entlang einer Fahrzeugquerachse. Idealerweise ist eine Fahrzeuglängsrichtung als eine Erstreckung rechtwinklig zu einer Fahrzeugquerrichtung zu verorten. Beispiele für Fahrzeugkomponenten, die üblicherweise in einer Kraftfahrzeugquerrichtung eingebaut sind, sind Kfz-Achsen, genauso auch Lenkgestänge. Mithilfe der Fahrzeuglängsachse und der Fahrzeugquerachse, die insbesondere einander schneiden, wird eine Ebene als eine (weitere) Konstruktionshilfe aufgespannt, die einen bodennahen Halbraum von einem bodenfernen Halbraum im Fahrzeug trennt. Sich senkrecht zu der Fläche erstreckend verläuft eine (gedachte) Fahrzeughochachse, die sowohl zum Boden hin als auch in den Himmel gerichtet ist. Ein Abschnitt auf der Achse (Fahrzeughochachse) kann als ein bodennaher Bereich bezeichnet werden, der unterhalb eines weniger bodennahen Bereichs bzw. unter einem bodenferneren Bereich angesiedelt ist. Mit diesen Ortsangaben "bodennaher Bereich", "bodenferner Bereich", "Fahrzeughochachse", "Fahrzeuglängsachse" und "Fahrzeugquerachse" kann eine geometrische Platzierung einer kleineren Komponente, wie eine Parksperre und/oder wie eine Parksperrenaktuatorik, in einem größeren Körper, wie dem Antriebsblock oder dem Fahrzeug, angegeben werden. Hierbei dienen die Achsen, Flächen und Bereiche zur Konstruktionshilfe.

Eine Parksperrenaktuatorik dient der Betätigung zumindest einer der Parksperren. Diese Aktuatorik kann - in einer Ausgestaltung - äußerst energieeffizient manuell über einen Wählhebel als ein erstes Bauteil der Aktuatorik betätigbar sein. Der Parksperrenaktuator als Kraftquelle der Aktuatorik kann aber auch einen Gleichstrommotor oder eine hydraulische oder eine pneumatisch in sich verschiebbare Zylinder-Kolben-Anordnung umfassen. Gibt es eine Kraftquelle, so kann der Wählhebel als reiner Auslöseknopf realisiert sein. Der Wählhebel kann aber einen Teil der Betätigungsenergie einleiten, während die Kraftquelle einen weiteren Teil der Betätigungsenergie für den Parksperrenaktuator liefert. Ein Gleichspannungsmotor (DC-Motor) ist in einem rein elektrisch angetriebenen Fahrzeug mit wenigen weiteren Komponenten integrierbar. Ein Inverter nach dem Stromspeicher ist nicht notwendig. Besonders vorteilhaft ist ein DC-Motor, der seine Energie wenigstens zum Teil aus einer zusätzlichen elektrischen Kapazität oder aus einem zusätzlichen Stromspeicher beziehen kann.

Nach einem Stromausfall bei der Versorgung des Antriebssystems kann unterhalb einer geeigneten Grenzgeschwindigkeit bei der Rotation des DC-Motors die Parksperre selbsttätig in eine Sperrstellung verfahren, insbesondere in den Fällen, in denen ein ausreichender Energiespeicher zur Verfügung steht.

Die Parksperrenaktuatorik umfasst mindestens einen, vorzugsweise genau zwei, Parksperrenaktuatoren. Ein Bauteil einer Parksperrenaktuatorik kann eine Parksperrenklinke bzw. eine Sperrklinke, ein Sperrhebel, ein Sperrstift oder eine Rastierung sein.

Im Fall einer vorhandenen Klinke als Sperrelement hat diese Klinke einen Eingriffsbereich, der an einem zum Eingriffsbereich gegengeformten Aufnahmebereich, wie an einem Zahn, an einer Zahnlücke, an einer Klaue oder an einer Lücke in der Klaue, eine Rotationsbewegung in einer ersten Drehrichtung und in einer der ersten Drehrichtung entgegengesetzten zweiten Drehrichtung blockieren kann. Diese Richtungen entsprechen einer Vorwärts- bzw. Rückwärts-Rollrichtung eines Fahrzeugs.

Der Eingriffsbereich und der Aufnahmebereich sind mit mindestens zwei, vorzugsweise zueinander komplementär geformten, Sperrflanken ausgestattet. Ein Sperrzustand der Parksperre liegt vor, wenn sich die Klinke in einer Eingriffsstellung befindet. Über die Klinke ist somit eine Verbindung zwischen einer drehbaren Getriebekomponente und einer drehfesten Getriebekomponente so herstellbar, dass der in der entsperrten Stellung gegebene Rotationsfreiheitsgrad durch Sperrung verloren geht. Der Aufnahmebereich kann z. B. an einer Rastenplatte oder einem Parksperrenrad ausgebildet sein.

Ein Einrasten der Parksperre erfolgt - in einer Ausgestaltung - im Wege einer Drehung der drehbaren Getriebekomponente. Ein Andruckmechanismus kann hierbei ein elastisch ausstreckendes Bauteil der Parksperrenaktuatorik umfassen.

Ist eine Klinke vorhanden, so fährt die Klinke in eine Rastierstellung ein.

Ein Beispiel für einen Andruckmechanismus ist eine drehbar gegenüber dem Getriebegehäuse gelagerte Rolle an einer Biegefeder, die auch als Andruckfeder bezeichnet werden kann. Die Rolle ist mithilfe eines Wählhebels und/oder eines Betätigungsgestänges der Aktuatorik in eine Auflage an einem Rücken des Sperrelements, z. B. der Klinke, verbringbar. Die Parksperrenaktuatorik kann somit mehrere Bauteile aufweisen, die jeweils für sich und/oder auch in einem Zusammenspiel eine Verbesserung der Parksperre in funktionaler Hinsicht ergeben.

Ein Bauteil einer Parksperrenaktuatorik kann ein Passstift sein, um den das Sperrelement, z. B. die Klinke, schwenkbar gelagert ist. Durch eine Relativbewegung wie eine Klinkendrehung kann der Eingriffsbereich der Klinke in einer Radialrichtung auf den Aufnahmebereich zu bewegt werden, wodurch der Sperrzustand ausbildbar ist. Kräfte, die in dem Aufnahmebereich auf die Sperrflanken wirken, können über den Passstift auf das Getriebegehäuse abgeleitet werden, insbesondere ohne dass die Klinke dabei ihre Position ändert.

Ein Lösen der Parksperre, z. B. veranlasst über den Wählhebel, wird durch ein Schwenken, z. B. der Klinke, in einer Relativbewegung herbeigeführt, wodurch ein Abstand zwischen dem Eingriffsbereich und dem Aufnahmebereich, insbesondere in eine Radialrichtung, herbeigeführt wird. In einer vorteilhaften Weiterbildung ist ein Zurückschwenken der Klinke bis zu einem Anschlag, wobei eine Getriebedrehbarkeit beibehalten bleibt. Der Anschlag stellt sicher, dass die Klinke nur einen kurzen Weg bis zum Einrasten zurücklegen muss.

Ein Betätigungsgestänge kann als Komponente bzw. Baugruppe der Parksperrenaktuatorik mehrere Bauteile umfassen, wie wenigstens eines der nachfolgend benannten Bauteile:
- mindestens eine Schubstange,
- mindestens ein Gelenk,
- mindestens einen Umlenkhebel,
- mindestens eine Drehscheibe,
- mindestens einen Anschlag,
- mindestens eine Führung oder
- mindestens eine Feder, wie eine Rückholfeder, eine Andruckfeder oder eine Ausgleichsfeder.

Vorzugsweise gehören mindestens zwei solcher Bauteile, insbesondere paarweise, zum Betätigungsgestänge. Das Betätigungsgestänge stellt eine, vorzugsweise formschlüssige, Verbindung zwischen wenigstens einer Sperrflanke (oder auch zwei Sperrflanken) und dem Wählhebel bzw. dem Parksperrenaktuator her.

Eine Flankenschräge im Bereich einer Sperrflanke kann z. B. im Zusammenwirken mit einer Ausgleichsfeder einen Eingriff der Parksperre verhindern, wenn eine Geschwindigkeit eines Fahrzeugs größer ist als eine Grenzgeschwindigkeit. Die Grenzgeschwindigkeit kann z. B. zwischen 1 km/h und 10 km/h liegen. Die Rückholfeder unterstützt ein Ausrasten, im Falle, dass das Rastelement eine Klinke ist, der Klinke, wenn der Fahrbetrieb wieder aufgenommen werden soll.

Wenn die Parksperrenaktuatorik mindestens einen Positionssensor, wie einen Klinkensensor, oder einen Drehsensor, wie einen Parksperrenradsensor, umfasst, kann ein Motorsteuergerät permanent den vorliegenden Zustand der Parksperre erfassen. Eine Betätigung der Klinke zum Einrasten ist auf die Drehstellung des Parksperrenrads synchronisierbar.

Die durch den Antriebsblock zur Verfügung gestellten Antriebe können, auch in einer Ausgestaltung des Antriebs als verzweigungsfreie Antriebe bezeichnet werden.

Nach einem weiteren Aspekt bei der Auslegung und der Zuordnung der Antriebskombination zum jeweiligen Straßenrad kann, insbesondere bei einem haftungsarmen Bodenkontakt, eines der antreibbaren Straßenräder an einer Achse über das andere antreibbare Straßenrad der gleichen Achse mit dem zu diesem anderen Straßenrad gehörenden, eigenen Elektromotor und mit der dazugehörenden Parksperre das Fahrzeug vollständig im Stand gehalten werden. Der Stillstand des Fahrzeugs ist sichergestellt, weil mit der Aktivierung der ersten Parksperre des einen Straßenrads (jenes ohne Bodenhaftung) zeitgleich das andere Straßenrad (mit Bodenhaftung) durch Aktivierung der zweiten Parksperre des anderen Straßenrads jenes andere Straßenrad gegen eine Verdrehung gesperrt ist. Ein einziger Parksperrenaktuator ist bei einer Verzweigung des Kraftflusses aus dem Parksperrenaktuator in der Lage, zwei Parksperren gleichzeitig einzulegen.

Unter einem idealisierten Blickwinkel sieht ein Betrachter eines schematischen Fahrzeugaufbaus, der den Blick auf den Antriebsblock entlang der Längsfahrzeugrichtung gerichtet hat, eine flächige Projektion der Komponenten des Antriebsblocks innerhalb der Umrisse des Fahrzeugs, wobei durch die Abfolge der Komponenten entlang der Fahrzeuglängsrichtung die näher zu dem Betrachter angeordneten Komponenten diese anderen Komponenten zumindest teilweise überdecken können, also jene Komponenten, die ferner zu dem Betrachter angeordnet sind. Die beiden Elektromaschinen des Antriebsblocks sind aufeinander folgend entlang der Längsfahrzeugrichtung so angeordnet, dass in einer Projektion von Umrissen der Elektromaschinen nur ein Teil der Umrisse zu sehen ist, weil sie sich überschneiden, sodass die durch die Umrisse eingeschlossenen Flächenbereiche (in jener Projektion) zumindest teilweise deckend sind. Wird bei der Bildung einer gedanklichen Abstraktion nicht nur flächig, sondern räumlich gedacht, wird also die räumliche Dimension entlang der Längsfahrzeugrichtung hinzugenommen, so kann von einer teilweise fluchtenden Anordnung der Elektromaschinen entlang der Längsfahrzeugrichtung, insbesondere in einem solchen Fall, gesprochen werden. Die Überdeckung macht in einer Ausführungsform zumindest 30 %, vorzugsweise zumindest 50 %, der Querschnittsfläche jeder der beiden Elektromaschinen aus. Entlang der Längsfahrzeugrichtung können die Elektromaschinen einen Mindestabstand zueinander haben. Ein Mindestabstand von z. B. zwei Zentimetern ermöglicht eine verbesserte Kühlung der Elektromaschinen durch eine Rundum-Luftzirkulation.

Die vorgestellte Anordnung der einzelnen Komponenten eines Antriebsblocks hat zahlreiche Vorteile. Die empfindlicheren Bauteile, wie z. B. die Inverter, sind aus der größten Gefahrenzone herausgenommen. Steinschläge und andere mechanische Impulse können deutlich geringere Schäden an den Gehäusen der Elektromaschinen verursachen als an den, durch die gewählte erhöhte Position filigraner auslegbaren, Gehäusen der Inverter.

Ein ganz besonderer Vorteil ergibt sich daraus, dass aufwendig entwickelte Kraftfahrzeuge mit ihren langen Entwicklungszeiten für Karosserien weiterhin nutzbar sind. Solche Kraftfahrzeuge können wahlweise mit einer Verbrennungskraftmaschine oder mit einem der zuvor vorgestellten Antriebsblöcke ausgestattet werden.

### Figurenkurzbeschreibung

Die vorliegende Erfindung kann noch besser verstanden werden, wenn Bezug auf die beiliegenden Figuren genommen wird, die beispielhaft besonders vorteilhafte Ausgestaltungsmöglichkeiten darlegen, ohne die vorliegende Erfindung auf diese einzuschränken, wobei
Figur 1 in schematischer Darstellung ein Kraftfahrzeug mit einem Antriebsblock zeigt,
Figur 2 eine erste Ansicht eines erfindungsgemäßen Antriebsblocks zeigt,
Figur 3 eine zweite Ansicht eines erfindungsgemäßen Antriebsblocks zeigt,
Figur 4 eine dritte Ansicht eines erfindungsgemäßen Antriebsblocks zeigt,
Figur 5 eine vierte Ansicht eines erfindungsgemäßen Antriebsblocks zeigt,
Figur 6 die Motoren, Parksperrenaktuatoren und weitere Komponenten eines Antriebsblocks ähnlich zu einer Ansicht nach Figur 5 zeigt,
Figur 7 die Ansicht nach Figur 6 ohne die blockartigen Steuergehäuse der Parksperrenaktuatoren zeigt,
Figur 8 eine gehäusefreie Ansicht von einer Stirnseite, also im Inneren des Antriebsblocks zeigt und
Figur 9 eine alternative Ausgestaltung eines erfindungsgemäßen Antriebsblock ohne Getriebegehäuse zeigt.

### Figurenbeschreibung

Figur 1 zeigt in schematischer Darstellung ein Kraftfahrzeug 201 mit einem erfindungsgemäßen Antriebsblock 1. Zu dem Kfz-Antrieb 203 gehört der Antriebsblock 1. Teil des Kfz-Antriebs 203 ist der elektrische Energiespeicher 43, der über Kabel, wie das Versorgungskabel 39 und das Versorgungskabel 41, mit dem Antriebsblock 1 verbunden ist.

Der Antriebsblock 1 ist ein Einzelradantrieb 205, 207, der zwei einzelne (Straßen-)Räder über seine beiden unabhängig arbeitenden Einzelradantriebe 205, 207 antreiben kann. Die beiden Einzelradantriebe 205, 207 befinden sich an der gleichen Achse 209, die in dem Ausführungsbeispiel nach Figur 1 die Hinterachse des Kraftfahrzeugs 201 ist (z. B. von einem typischen Hinterachsen angetriebenen Sportwagen).

In einer weiteren, graphisch nicht dargestellten Ausführungsform können sich die Einzelradantriebe an der Vorderachse, siehe beispielsweise die Achse 209^{I} in Figur 1, befinden. Weitere mögliche Ausgestaltungen weisen Einzelradantriebe an der Hinterachse als eine erste gleiche Achse und an der Vorderachse als eine zweite gleiche Achse auf. Somit sind auch solche Achsenanordnungen erfindungsgemäß ausführbar, bei denen z. B. im hinteren Fahrzeugbereich mehrere einzeln angetriebene Achsen vorhanden sind. Jede Achse ist für sich betrachtet eine als gleiche Achse zu bezeichnende Achse, die mit zwei Einzelradantrieben ausgestattet sein kann.

Anhand der Fahrgastzelle 223 und der Anordnung des Lenkrads 221 an dem Lenkgestänge 225 ist in Figur 1 zu erkennen, dass es sich in dem Ausführungsbeispiel nach Figur 1 um einen Hinterachsantrieb bei dem Einzelradantrieb 205, 207 handelt. Der Antriebsblock 1 ist quer eingebaut, was an der Kraftfahrzeugquerrichtung 213 zu erkennen ist. Der Antriebsblock 1 ist in Längsrichtung schmaler als in Querrichtung, wie durch einen Vergleich der Erstreckung des Antriebsblocks 1 in Längsfahrzeugrichtung 211 im Vergleich mit der Erstreckung in Kraftfahrzeugquerrichtung 213 zu erkennen ist.

Die Achsen 209, 209^{I} sind in Figur 1 strichliert eingetragen. Bei den Achsen 209, 209^{I} handelt es sich um Konstruktionshilfen bzw. Gedankenstützen, durch die die Anordnung der Straßenräder des Kraftfahrzeugs 201 verdeutlicht wird.

In dem in Figur 1 gezeigten Konstruktionsbeispiel sind die Straßenräder mit jeweils einer Einzelradaufhängung befestigt, die eine bewegliche Verbindung zwischen einem Fahrzeugkörper (ohne Bezugszeichen), der die Fahrgastzelle 223 umfasst, und dem jeweiligen Straßenrad bildet. Die Achsen 209, 209^{I} sind, mit anderen Worten, durch Führungselemente der Räder erkennbar, wie anhand von Einzelradaufhängungen, z. B. die zeichnerisch dargestellten Dreiecksaufhängungen, wie aber auch anhand der Achsschenkel, anhand einer Pendelachse, anhand einer Längslenkerachse, anhand einer Schräglenkerachse, anhand einer Mehrlenkerachse, anhand einer Portalachse, anhand einer Starrachse oder anhand von Verbundaufhängungen gemäß weiteren, nicht im Einzelnen graphisch dargestellten Ausführungsmöglichkeiten.

Figur 2 zeigt in einer seitlichen Ansicht ein Ausführungsbeispiel eines erfindungsgemäßen Antriebsblocks 1. In der Ansicht gemäß Figur 2 ist die erste Elektromaschine 3 zusammen mit dem ersten Getriebe 7 von der Seite aus zu sehen. In dieser Ansicht ist auch die erste Steckerposition 49 an dem ersten Kabelsteckadapter 23 zu sehen. Das Getriebe 7 erstreckt sich schräg ausgerichtet in seinem Getriebegehäuse 27 hinter dem Teil des Kabelsteckadapters 23, der die Steckerpositionierung 49 umfasst. An jene Stelle sind die ersten Versorgungskabel 39, 39^{I} herangeführt.

In Figur 2 ist der Antriebsblock 1 in der Einbaulage 71 dargestellt. In der Einbaulage 71 trennt die erste Trägerplatte 19 den ersten Inverter 11 mit seinem kastenartigen Gehäuse 15 von den darunter liegenden beiden Komponenten Elektromaschine 3 und Getriebe 7. Der erste Inverter 11 bildet mit seiner Oberseite die höchste Stelle 73. Durch das Gehäuse 27 wird die tiefste Stelle 75 gebildet.

Die erste Elektromaschine 3 hat eine Breite 45, die sich teilweise hinter dem Getriebegehäuse 27 erstreckt.

Der Inverter 11 (zusammen mit dem Inverter 13 - siehe Figur 3) bildet, wie in Figur 2 zu sehen ist, die Oberseite 77 des Antriebsblocks 1.

Figur 3 zeigt den Antriebsblock 1 aus einer weiteren seitlichen Perspektive. Werden die Figur 2 und die Figur 3 miteinander verglichen, so sieht der Antriebsblock 1 von beiden Seiten aufgrund der ersten Elektromaschine 3, der zweiten Elektromaschine 5, des ersten Getriebes 7, des zweites Getriebes 9, des ersten Inverters 11 und des zweiten Inverters 13 nahezu identisch aus. Unterschiede zwischen linker Ansicht (gemäß Figur 2) und rechter Ansicht (gemäß Figur 3) ergeben sich durch die beiden Kabelsteckadapter 23, 25, deren Steckerpositionierungen 49, 51 anders ausgeführt sind. Hierdurch wird Bedacht genommen auf die unterschiedlichen Strompfadlängen (vgl. Figur 4), die durch die Leitungsführungen 57, 59 hervorgerufen werden. Die (Gesamt-)Strompfadlänge 53 (vgl. Figur 2 i. V. m. Figur 4), die sich aus den einzelnen Strompfadlängen zusammensetzt, kann durch den Kabelsteckadapter 23 angepasst werden. Die (Gesamt-)Strompfadlänge 53, 55, die sich aus den einzelnen Strompfadlängen der einzelnen Komponenten der Verbindung zwischen Batterie 43 und dem eingehausten Inverter 15 bzw. eingehausten Inverter 17 ergibt, kann für alle Inverter 15, 17 bzw. 11, 13 gleich gehalten werden. Das (zweite) Getriebegehäuse 29 erstreckt sich hinter dem (zweiten) Kabelsteckadapter 25.

Die zweite Elektromaschine 5 hat eine (zweite) Breite 47, die dem Durchmesser der zylindrisch gestalteten Elektromaschine (im Wesentlichen) entspricht. Die (zweite) Breite 47 beträgt ungefähr die Hälfte der Breite (bzw. Tiefe bzw. Länge) des auf der Elektromaschine 5 oberhalb aufgebrachten (zweiten) Inverters 13.

Der erste Inverter 11 wird durch die erste Trägerplatte 19 unterstützt. Der zweite Inverter 13 wird durch die zweite Trägerplatte 21 unterstützt.

Besonders vorteilhaft ist es, wenn der (fünfte) Befestigungspunkt 103 zwischen dem oberen Teil des Gehäuses des Inverters 13 und der Trägerplatte 21 ein gedämpfter Befestigungspunkt 103, z. B. durch eine Moosgummimatte ist.

Die verschiedenen Versorgungskabel 39, 39^{I}, 41, 41^{I} sind unterschiedlich lang ausgestaltet. Durch die Gestaltung der Kabelsteckadapter 23, 25 können Längenausgleiche im Bereich oder mittels der Steckerpositionierungen 49, 51 bewirkt werden.

Die Breite 47 der zweiten Elektromaschine 5 entspricht der Breite 45 der ersten Elektromaschine 3.

In Figur 4 sind besonders gut die Kühlrippen 61, 63, 65, 67 an den kastenartigen Gehäusen 15, 17 der Inverter 11, 13 (vgl. Figur 2 und Figur 3) zu sehen.

In Figur4 ist auch gut zu erkennen, dass jeder Inverter 11, 13 seinen eigenen Elektroanschluss 83, 85, seinen eigenen Kühlkreislaufeingang 87, 89, seinen eigenen Kühlkreislaufausgang 91, 93 und seine Befestigungspunkte 95, 97, 99, 101 hat.

Die (zweite) Strompfadlänge 55 der (zweiten) Leitungsführung 59 wird durch den Abstand des elektrischen Energiespeichers 43 zu dem Antriebsblock 1 bestimmt.

Die beiden kastenartigen Gehäuse 15, 17 der Inverter 11, 13 sind ein wenig beabstandet, sodass eine Trennfuge 81 zwischen beiden ausgebildet ist.

Die Inverter 11, 13 können baugleich ausgeführt sein. Allein durch ein Drehen um die Gehäusehochachse 79 ist es möglich, zwei zueinander identische Inverter 11, 13 zu verwenden, die beide Teile der Oberseite 77 des Antriebsblocks 1 sind (vgl. Figuren 2 bis 4).

Die in den einzelnen Figuren gezeigten Ausgestaltungsmöglichkeiten lassen sich auch untereinander in beliebiger Form verbinden.

Die zentral angeordnete Batterie, wie der elektrische Energiespeicher 43, kann auch an mehreren Stellen verteilt im Fahrzeug platziert sein. Dadurch ergeben sich noch größere Unterschiede in den Kabellängen der Versorgungskabel 39, 39', 41, 41'.

Wie anhand der Figuren 2 und 3 zu sehen ist, gibt es mehrere Stecker, an die wahlweise das eine Versorgungskabel 39, 41 oder das andere Versorgungskabel 39^{I}, 41^{I} herangeführt werden kann.

Statt, wie dargestellt, dass die beiden Elektromaschinen 3, 5 zueinander in Bezug auf die tiefste Stelle 75 leicht versetzt angeordnet sind, können, sofern mehr Platz in axialer Richtung zur Verfügung steht, die Elektromaschinen 3, 5 auch auf gleicher Ebene in Bezug auf die Inverter 11, 13 unterhalb dieser angeordnet sein.

Figur 5 zeigt den Antriebsblock 1 aus einer Perspektive, aus der ein erster Parksperrenaktuator 321 und ein zweiter Parksperrenaktuator 323, die im bodennahen Bereich 325 angesiedelt sind, zu sehen ist. Zwischen den beiden Getriebegehäusen 27, 29, aus denen Abtriebswellen 31, 33 herausstehen, sind die Parksperrenaktuatoren 321, 323 angesiedelt. Die Parksperrenaktuatoren 321, 323 befinden sich zwischen den Getrieben bzw. den Getriebegehäusen 27, 29. In den Getriebegehäusen 27, 29 befinden sich jeweils ein in der gewählten Darstellung nicht zu sehendes Ausgangszahnrad 357, 357^{I}, das eine Stirnzahnradstufe der in den Getriebegehäusen 27, 29 jeweils befindlichen Getriebe (nicht einsehbar, vgl. Getriebe 7, 9 in Figur 4) mit den Abtriebswellen 31, 33 verbindet. Die Parksperrenaktuatoren 321, 323 können jeweils eines der Ausgangszahnräder 357, 357^{I} mit einer zugehörigen Parksperre (in der Darstellung nicht zu sehen) festsetzen. In einem festgesetzten Zustand sind die Abtriebswellen 31, 33 örtlich festgestellt; sie können nicht mehr rotieren. Ein durch die Parksperrenaktuatoren 321, 323 festgesetztes Kraftfahrzeug (vgl. Kraftfahrzeug 201 in Figur 1) ist gegen ein Wegrollen zweifach gesichert.

Im bodenfernen Bereich 327 sind die Inverter 11, 13 platziert.

Wie anhand der Figur 6 besser im Vergleich mit Figur 5 zu sehen ist, überdecken die Elektromaschinen 3, 5 die im bodennahen Bereich 325 platzierten Parksperraktuatoren 321, 323, d. h. die Elektromaschinen 3, 5 begrenzen den Bauraum für die Parksperrenaktuatoren 321, 323 nach oben hin. Die zweite Elektromaschine 5 ist höher angesiedelt als die erste Elektromaschine 3. Die zweite Elektromaschine 5 befindet sich somit näher zu einem bodenferneren Bereich, also näher am bodenfernen Bereich 327 im Vergleich zur ersten Elektromaschine 3.

Zum Bewegen eines Fahrzeugs leitet z. B. die Elektromaschine 5 ein Drehmoment über eine Eingangswelle 359 auf eine Ritzel 331 bzw. weiter über eine Zahnradgetriebestufe 351 auf ein Straßenrad einer Achse (vgl. Achse 209 in Figur 1), wenn die Parksperre 319 sich in einem geöffneten Zustand befindet. In einer Parksperren-Sperrstellung, d. h., wenn die Parksperre 319 sich in einem geschlossenen bzw. einem eingelegten Zustand befindet, wird eine Drehmomentenübertragung u. a. durch ein Sperrsignal, das an einen elektronischen Parksperreninterlockeingang an der Elektromaschine 5 bzw. an einem Invertersteuergerät (nicht eingezeichnet) - nach Art einer Rückkopplungsschleife - anliegen kann, verhindert.

Die beiden Parksperrenaktuatoren 321, 323 sind Teil einer Parksperrenaktuatorik 324, die dem ersten Typ zugerechnet wird. Der erste Typ Parksperrenaktuatorik 324 erlaubt eine Einzelbetätigung einer jeweils dem Parksperrenaktuator 321, 323 zugeordneten Parksperre, wie der Parksperre 319 und der Parksperre 317 (siehe auch Figur 7). Eine von einem der Parksperrenaktuatoren 321, 323 ausgeübte Betätigungskraft erfährt in der Parksperrenaktuatorik 324 eine Umlenkung. Über ein Betätigungsgestänge (siehe Betätigungsgestänge 353, 353^{I} in Figur 8) wird eine aktuatorische Betätigungskraft gehebelt und somit verstärkt.

Für den Abtrieb gibt es ein größeres Ritzel 333, 333^{I}, das, wie anhand des Ritzels 331 zu sehen ist, von einem kleineren Ritzel, dem Ritzel 331 angetrieben wird. Die beiden Ritzel 331, 333^{I} bilden die Übertragungsstufe 345. Kleines Ritzel 331 und großes Ritzel 333^{I} sind zu einer Zahnradgetriebestufe 351 zusammengefasst (vereinfacht dargestellt, d. h. ohne Zähne gezeichnet). Eine weitere Übertragungsstufe wird durch eine Planetengetriebestufe 349 gebildet, von der eine Außenverzahnung eines Hohlrades zum Festsetzen im Getriebegehäuse 29 (siehe Figur 5) zu sehen ist. Das Hohlrad der Planetengetriebestufe 349 steht somit im Getriebegehäuse 29. Zwischen Planetengetriebestufe 349 und Zahnradgetriebestufe 351 gibt es eine Klinkensperre 335 mit einem Ringrad 341, an dem ein Außenzahnkranz 343 vorhanden ist. Durch einen Federenergiespeicher 339 wird die Parksperre 319 im geöffneten Zustand gehalten; dies ist so lange der Fall, so lange der zweite Parksperrenaktuator 323 die Parksperre 319 noch nicht betätigt hat. Zwischen Rotorwelle der Elektromaschine 3, 5 und der Planetengetriebestufe, wie der Planetengetriebestufe 349, ist eine Steckverzahnung zwischen den beiden Wellen ausgebildet (nicht sichtbar). Der Planetenträger der Planetengetriebestufe 349 ist auf das Ritzel 331 geführt, das als Eingangsritzel der Zahnradgetriebestufe 351 arbeitet.

Figur 7 zeigt die in Figur 6 gezeigte Parksperre 319 nach dem Ausblenden weiterer Bauteile. Hierdurch werden die Betätigungsgestänge 353, 353^{I} besser sichtbar. Zu dem Betätigungsgestänge 353 gehört ein Passstift 355, auf dem der Federenergiespeicher 339 (siehe Figur 6), angeordnet ist. Der Passstift 355 ist länger als das Ringrad 341 mit seinem Außenzahnkranz 343. Die zweite Elektromaschine 5 ist der Antrieb, der durch das Ringrad 341 anhand des Außenzahnkranzes 343 festgesetzt werden kann.

Wie außerdem anhand der Figur 7 gut zu sehen ist, liegt die eine Parksperre 317 bezüglich der Elektromaschinen 3, 5 auf der einen Seite der Elektromaschinen 3, 5 und die andere Parksperre 319 liegt bezüglich der Elektromaschinen 3, 5 auf der anderen Seite der Elektromaschinen 3, 5. Die beiden Parksperren 317, 319 begrenzen die Stirnseiten der Elektromaschinen 3, 5. Die Stirnseiten der Elektromaschinen 3, 5 sind durch die Parksperren 317, 319 eingefasst.

Figur 8 zeigt die Klinkensperre 335 mit einer Klinke 337 hinter der Planetengetriebestufe 349. Das Ringrad 341 mit seinem Außenzahnkranz 343 ist auf die Klinke 337 abgestimmt (Breite und Tiefe der Verzahnung sind auf die Klinkengröße abgestimmt). Das Betätigungsgestänge 353 sorgt für ein Auslösen bzw. Sperren der Klinke 337 durch Eingriff zwischen die Zähne des Außenzahnkranzes 343 des Ringrads 341. Für die zweite (in der Figur 8 nicht dargestellte) Parksperre ist das zweite Betätigungsgestänge 353^{I} zu sehen.

Figur 9 zeigt einen alternativ gestalteten Antriebsblock 1^{I}. Die beiden Elektromaschinen 3^{I}, 5^{I} können von dem einen einzigen Parksperrenaktuator 347 durch die Ringräder 341^{I} festgesetzt werden, sodass die Abtriebswellen 31, 33 sich nicht mehr drehen können. Ist der Parksperrenaktuator 347 in einer zweiten Variante (im Sinne eines zweiten Typs) der Parksperrenaktuatorik 348 in dem Antriebsblock 1^{I} sowohl für das Festsetzen einer ersten Abtriebswelle 31, die einer ersten Elektromaschine 3^{I} zur Übertragung von Antriebsleistung zugeordnet ist, als auch für das Festsetzen einer zweiten Abtriebswelle 33, die einer zweiten Elektromaschine 5^{I} zur Übertragung von Antriebsleistung zugeordnet ist, gestaltet, so kann ein Parksperrenaktuator 347 eine komplette Achse 209 (vgl. Figur 1) festhalten. Eine von dem Parksperrenaktuator 347 ausgeübte Betätigungskraft bzw. Betätigungsbewegung wird über die Parksperrenaktuatorik 348 verzweigt bzw. aufgeteilt. Eine Teilbetätigungskraft bzw. Bewegung innerhalb der Parksperrenvorrichtung wird zu einer ersten und einer zweiten Parksperre (ohne Bezugszeichen) umgelenkt, wobei insbesondere eine Kraftumsetzung von einer aktuatorischen Drehbewegung in eine Schub-Bewegung zur Erzeugung eines Parksperren-Sperrzustands erfolgt.

In einer Ausführungsvariante ist der Parksperren-Sperrzustand durch eine Zug-Bewegung einnehmbar.

Das in Figur 1 (schematisch) gezeigte Fahrzeug 201 ist "tot" gesetzt bzw. kann nicht mehr durch rotierende Räder an einer Achse 209 bewegt werden. Von zwei Achsen 209, 209^{I} kann so zumindest eine der beiden Achsen festgesetzt werden.

### Bezugszeichenliste

- 1, 1^{I}: Antriebsblock
- 3, 3^{I}: erste Elektromaschine
- 5, 5^{I}: zweite Elektromaschine
- 7: erstes Getriebe
- 9: zweites Getriebe
- 11: erster Inverter
- 13: zweiter Inverter
- 15: erstes kastenartiges Gehäuse, insbesondere des ersten Inverters
- 17: zweites kastenartiges Gehäuse, insbesondere des zweiten Inverters
- 19: erste Trägerplatte
- 21: zweite Trägerplatte
- 23: erster Kabelsteckadapter
- 25: zweiter Kabelsteckadapter
- 27: erstes Getriebegehäuse
- 29: zweites Getriebegehäuse
- 31: erste Abtriebswelle
- 33: zweite Abtriebswelle

- 39, 39^{I}: erstes Versorgungskabel
- 41, 41^{I}: zweites Versorgungskabel
- 43: elektrischer Energiespeicher
- 45: erste Breite der ersten Elektromaschine
- 47: zweite Breite der zweiten Elektromaschine
- 49: erste Steckerpositionierung
- 51: zweite Steckerpositionierung
- 53: erste Strompfadlänge
- 55: zweite Strompfadlänge
- 57: erste Leitungsführung
- 59: zweite Leitungsführung
- 61: erste Kühlrippe
- 63: zweite Kühlrippe
- 65: dritte Kühlrippe
- 67: vierte Kühlrippe
- 71: Einbaulage
- 73: höchste Stelle
- 75: tiefste Stelle
- 77: Oberseite des Antriebsblocks
- 79: Gehäusehochachse
- 81: Trennfuge
- 83: erster Elektroanschluss
- 85: zweiter Elektroanschluss
- 87: erster Kühlkreislaufeingang
- 89: zweiter Kühlkreislaufeingang
- 91: erster Kühlkreislaufausgang
- 93: zweiter Kühlkreislaufausgang
- 95: erster Befestigungspunkt
- 97: zweiter Befestigungspunkt
- 99: dritter Befestigungspunkt
- 101: vierter Befestigungspunkt
- 103: fünfter Befestigungspunkt
- 201: Kraftfahrzeug
- 203: Kfz-Antrieb
- 205: erster Einzelradantrieb
- 207: zweiter Einzelradantrieb
- 209: Achse, insbesondere Kfz-Achse, die mit zwei Einzelradantrieben realisiert ist
- 209^{I}: Achse, insbesondere Kfz-Achse, an der ein Lenkgestänge zu finden ist
- 211: Längsfahrzeugrichtung
- 213: Kraftfahrzeugquerrichtung
- 221: Lenkrad
- 223: Fahrgastzelle
- 225: Lenkgestänge

- 317: erste Parksperre
- 319: zweite Parksperre
- 321: erster Parksperrenaktuator, insbesondere eines ersten Typs einer Parksperrenaktuatorik
- 323: zweiter Parksperrenaktuator, insbesondere eines ersten Typs einer Parksperrenaktuatorik
- 324: erster Typ von Parksperrenaktuatorik
- 325: bodennaher Bereich
- 327: bodenferner Bereich
- 331: kleineres Ritzel
- 333, 333^{I}: größeres Ritzel
- 335: Klinkensperre
- 337: Klinke
- 339: Federenergiespeicher
- 341, 341^{I}: Ringrad, insbesondere Parksperrenringrad
- 343: Außenzahnkranz, insbesondere des Ringrads
- 345: Übertragungsstufe
- 347: Parksperrenaktuator eines zweiten Typs von Parksperrenaktuatorik
- 348: zweiter Typ von Parksperrenaktuatorik
- 349: Planetengetriebestufe
- 351: Zahnradgetriebestufe
- 353, 353^{I}: Betätigungsgestänge
- 355: Passstift
- 357, 357^{I}: Ausgangszahnrad, insbesondere einer Stirnzahnradstufe
- 359: Eingangswelle

## Patentansprüche

1. Antriebsblock (1, 1^{I}) eines elektromotorischen Kfz-Antriebs
für zwei Einzelradantriebe (3, 5) einer gleichen Achse,
mit einer ersten Elektromaschine (3), die eine erste Rotorachse hat, und
mit einem stirnseitig der ersten Elektromaschine (3) angeordneten ersten Getriebe (7) und
mit einer zweiten Elektromaschine (5), die eine zweite Rotorachse hat, und
mit einem stirnseitig der zweiten Elektromaschine (5) angeordneten zweiten Getriebe (9),
die zumindest teilweise für einen Einbau in einer Längsfahrzeugrichtung deckend zueinander angeordnet sind und
die für einen Kraftfahrzeugquereinbau vorgesehen sind,
und der Antriebsblock (1) zwei Inverter (11, 13) besitzt, je einen Inverter (11, 13) für die Ansteuerung einer der beiden Elektromaschinen (3, 5),
**dadurch gekennzeichnet, dass**
der Antriebsblock (1, 1^{I}) eine Einbaulage (71) besitzt,
in der der Antriebsblock (1, 1^{I}) für jenen Einbau in Kraftfahrzeugquerrichtung (213) vorgesehen ist,
bei dem die Elektromaschinen (3, 5) in der Längsfahrzeugrichtung zumindest teilweise deckend angeordnet sind,
wobei in der Einbaulage (71) eine erste Trägerplatte (19) zumindest einen der Inverter (11, 13) mit seinem kastenartigen Gehäuse (15) als flacher, nahezu quadratischer Kasten ausgebildet von den darunter liegenden Komponenten Elektromaschine (3, 5) und Getriebe (7, 9) trennt,
und wobei die zwei Inverter (11, 13) an einer in der Einbaulage (71) höchsten Stelle (73) des Antriebsblocks (1) angeordnet sind
und mindestens einer der Inverter (11, 13), der neben dem anderen Inverter (13, 11) angeordnet ist, ungefähr eine Hälfte einer Oberseite (77) des Antriebsblocks (1) durch seine Kastenform ausbildet,
und dass die beiden Elektromaschinen (3, 5) bezüglich ihrer Rotorachsen parallel und bezüglich ihrer Gehäuse hintereinander angeordnet sind,
wodurch der Antriebsblock (1) sich aus zwei L-förmigen Motor-Getriebe-Einheiten mit eigenen Getriebegehäusen (27, 29) zusammensetzt.

2. Antriebsblock (1, 1') nach Anspruch 1,
**dadurch gekennzeichnet, dass**
die Inverter (11, 13) als erster Inverter (11) und als zweiter Inverter (13) zusammen die Oberseite (77) des Antriebsblocks (1) bilden und
insbesondere der erste Inverter (11) eine rechte Seite der hintereinander angeordneten Elektromaschinen (3, 5) als überspannende, flache Einheit bedeckt.

3. Antriebsblock (1, 1^{I}) nach Anspruch 1 oder Anspruch 2,
**dadurch gekennzeichnet, dass**
einer der Inverter (11, 13) auf der Trägerplatte (19, 21) als flache Abdeckplatte über beide Elektromaschinen (3, 5) ruht oder der erste Inverter (11) durch die erste Trägerplatte (19) und der zweite Inverter (13) durch eine zweite Trägerplatte (21) unterstützt wird.

4. Antriebsblock (1, 1^{I}) nach einem der vorhergehenden Ansprüche,
**dadurch gekennzeichnet, dass**
einer der Inverter (11, 13) einen, insbesondere seitlichen, Kabelsteckadapter (23, 25) aufweist, durch den eine Steckerpositionierung (49, 51) an einer Stelle einer Längserstreckung oder einer Breite (45, 47) einer der Elektromaschinen (3, 5) vorgegeben wird,
wobei vorzugsweise ein Versorgungskabel (39, 39^{I}, 41, 41') von einem elektrischen Energiespeicher (43) an dem Kabelsteckadapter (23, 25) anschließbar ist.

5. Antriebsblock (1, 1^{I}) nach Anspruch 4,
**dadurch gekennzeichnet, dass**
jeder der Inverter (11, 13) einen eigenen Kabelsteckadapter (23, 25) als seitlich platzierte Elektroübergabe hat, deren Steckerpositionierung (49, 51) je an einer Stelle der Längserstreckung des Kabelsteckadapters (23, 25) derart platziert ist, dass sich ein gleicher Abstand zwischen jeder Steckerpositionierung (49, 51) und einer, insbesondere zentralen, Energiequelle ergibt.

6. Antriebsblock (1, 1^{I}) nach Anspruch 4 oder Anspruch 5,
**dadurch gekennzeichnet, dass**
eine erste Strompfadlänge (53, 55), die für eine Länge eines ersten Anschlusskabels und einer Leitungsführung (57, 59) in einem ersten Kabelsteckadapter (23) vorgehalten ist, und eine zweite Strompfadlänge (55), die für eine Länge eines zweiten Anschlusskabels und einer Leitungsführung (57, 59) in einem zweiten Kabelsteckadapter (25) vorgehalten ist, einander entsprechen, indem durch die Leitungsführungen (57, 59) ein Ausgleich zwischen unterschiedlichen Längen der Anschlusskabel herstellbar ist.

7. Antriebsblock (1, 1^{I}) nach einem der Ansprüche 4 bis 6,
**dadurch gekennzeichnet, dass**
der Kabelsteckadapter (23, 25) mehrere Stecker oder Steckerpositionen aufweist, an die ein Anschlusskabel, insbesondere wechselweise, anschließbar ist.

8. Antriebsblock (1, 1^{I}) nach einem der vorhergehenden Ansprüche,
**dadurch gekennzeichnet, dass**
eines der Getriebegehäuse (27, 29) randseits am Antriebsblock (1) angebracht ist und einen elliptischen, schrägen, auf einen Boden gerichteten Verlauf mit zwei Brennpunkten aufweist, dessen einer Brennpunkt für eine Radabtriebswelle genutzt wird.

9. Antriebsblock (1, 1^{I}) nach einem der vorhergehenden Ansprüche,
**dadurch gekennzeichnet, dass**
in der Einbaulage (71) des Antriebsblocks (1) seine Getriebegehäuse (27, 29) im Bereich einer tiefsten Stelle (75) des Antriebsblocks (1) weiter in einen bodennahen Bereich reichen als eine tiefste Stelle der Elektromaschinen (3, 5),
wodurch insbesondere von den Getriebegehäusen (27, 29) seitlich ein Bauraum eingefasst wird, der von den Elektromaschinen (3, 5) nach oben begrenzt wird.

10. Antriebsblock (1, 1^{I}) nach einem der vorhergehenden Ansprüche,
**dadurch gekennzeichnet, dass**
in der Einbaulage (71) des Antriebsblocks (1) mindestens einer seiner Inverter (11, 13) mit mehreren, nach oben stehenden Kühlrippen (61, 63, 65, 67) ausgestattet ist,
die sich vorzugsweise parallel zu einer Längserstreckung einer der Elektromaschinen (3, 5) erstrecken.

11. Antriebsblock (1, 1^{I}) nach einem der vorhergehenden Ansprüche,
**dadurch gekennzeichnet, dass**
in der Einbaulage (71) des Antriebsblocks (1) die zwei Inverter (11, 13) benachbart an der Oberseite (77) des Antriebsblocks (1) angeordnet und zueinander um ihre Gehäusehochachsen (79) gedreht platziert sind,
wobei insbesondere die Inverter (11, 13) bezüglich einer Trennfuge (81) zwischen ihnen als punktsymmetrisch gespiegelt angeordnete Inverter (11,13) platziert sind.

12. Antriebsblock (1, 1^{I}) nach einem der vorhergehenden Ansprüche,
**dadurch gekennzeichnet, dass**
jeder der Inverter (11, 13)
über einen eigenen Elektroanschluss (83, 85) und/oder
über einen eigenen Kühlkreislaufeingang (87, 89) und/oder
über einen eigenen Kühlkreislaufausgang (91, 93) und/oder
durch mehrere Befestigungspunkte (95, 97, 99, 101), insbesondere dämpfend gelagerte Befestigungspunkte (95, 97, 99, 101),
mit mindestens einer weiteren Komponente des Antriebsblocks (1) verbunden ist.

13. Antriebsblock (1, 1^{I}) nach einem der vorhergehenden Ansprüche,
**dadurch gekennzeichnet, dass**
der Antriebsblock (1, 1^{I}) mit zwei Parksperren (317, 319) sowie mit einer Parksperrenaktuatorik (324, 348) ausgestattet ist,
wobei aus je einem Inverter (11, 13), je einer Elektromaschine (3, 5) und je einem Getriebe (7, 9) eine Antriebskombination gebildet ist,
die einen eigenen Antrieb (205, 207) darstellt,
der jeweils mit einer der beiden Parksperren (317, 319) zum Blockieren einer Abtriebswelle (31, 33), die aus dem Antrieb (205, 207) auf einen Radantrieb herausführt, ausgestattet ist,
und dass die Parksperrenaktuatorik (324, 348),
die entweder einen einzigen Parksperrenaktuator (347) zur synchronen Betätigung der beiden Parksperren (317, 319), um einen Sperrzustand zu erzeugen, umfasst oder zwei Parksperrenaktuatoren (321, 323) zur Erzeugung je eines Sperrzustands in jeder Antriebskombination umfasst,
in der Einbaulage (71) des Antriebsblocks (1, 1^{I}) in einem bodennahen Bereich (325) zwischen den Getrieben (7, 9) angesiedelt ist.

14. Antriebsblock (1) nach Anspruch 13,
**dadurch gekennzeichnet, dass**
jede Parksperre (317, 319) in dem Sperrzustand eine Rotationshemmung anhand ihres Getriebes (7, 9) bewirkt.

15. Antriebsblock (1, 1') nach Anspruch 13 oder Anspruch 14,
**dadurch gekennzeichnet, dass**
mindestens eine der Parksperren (317, 319) so gestaltet ist, dass die mindestens eine Parksperre (317, 319) in dem Sperrzustand in einen Planetenträger eingreifend eine Planetengetriebestufe (349) des Getriebes (7, 9) rotatorisch fixiert
und/oder
dass die mindestens eine Parksperre (317, 319) ein Ausgangszahnrad (357, 357^{I}), insbesondere einer Stirnzahnradstufe, in dem Sperrzustand rotatorisch fixiert
und/oder
dass die mindestens eine Parksperre (317, 319) eine Eingangswelle (359) des Getriebes (7, 9) rotatorisch fixiert
und/oder
ein Blockieren an einem kleineren Ritzel (331) von zwei eine Übertragungsstufe (345) bildenden Ritzeln (331, 333, 333^{I}) im eingelegten Zustand der Parksperre (317, 319) erfolgt,
wobei insbesondere die Parksperre (317, 319) eine hydraulisch oder elektromotorisch betätigte Klinkensperre (335) ist,
die vorzugsweise einen Federenergiespeicher (339) aufweist.

## Claims

1. Drive block (1, 1^{I}) of an electric motor-driven motor vehicle drive
for two single-wheel drives (3, 5) on one common axle,
comprising a first electric machine (3), which has a first rotor axis, and
comprising a first transmission (7) arranged on an end face of the first electric machine (3), and
comprising a second electric machine (5), which has a second rotor axis, and
comprising a second transmission (9) arranged on an end face of the second electric machine (5),
which are arranged at least partially congruent with each other for installation in a longitudinal vehicle direction, and
which are configured for transverse installation in a motor vehicle,
the drive block (1) having two inverters (11, 13), a respective inverter (11, 13) for actuating one of the two electric machines (3, 5),
**characterized in that**
the drive block (1, 1^{I}) has an installation orientation (71),
in which the drive block (1, 1') is provided for installation in the motor vehicle transverse direction (213),
and in which the electric machines (3, 5) are arranged at least partially congruent with each other in the longitudinal vehicle direction,
wherein, in the installation orientation (71), a first support plate (19) separates at least one of the inverters (11, 13) with its box-like housing (15), designed as a shallow, almost square box, from the components electric machine (3, 5) and transmission (7, 9) located therebelow,
and wherein the two inverters (11, 13) are arranged at a highest point (73) of the drive block (1) in the installation orientation (71)
and at least one of the inverters (11, 13), which is arranged next to the other inverter (13, 11), with its box shape forms approximately one half of an upper side (77) of the drive block (1),
and **in that** the two electric machines (3, 5) are arranged in parallel with regard to their rotor axes and one behind the other with regard to their housings,
as a result of which the drive block (1) is composed of two L-shaped motor/transmission units having their respective transmission housings (27, 29).

2. Drive block (1, 1^{I}) according to claim 1,
**characterized in that**
the inverters (11, 13), as a first inverter (11) and as a second inverter (13), together form the upper side (77) of the drive block (1), and
in particular the first inverter (11) covers a right-hand side of the electric machines (3, 5) arranged one behind the other, as a shallow unit spanning the latter.

3. Drive block (1, 1^{I}) according to claim 1 or claim 2,
**characterized in that**
one of the inverters (11, 13) rests on the support plate (19, 21) as a flat cover plate across both electric machines (3, 5), or the first inverter (11) is supported by the first support plate (19) and the second inverter (13) is supported by a second support plate (21).

4. Drive block (1, 1^{I}) according to any one of the preceding claims,
**characterized in that**
one of the inverters (11, 13) has a cable connection adapter (23, 25), in particular sidewise, by which a connector positioning (49, 51) is predefined at a point on a longitudinal extent or on a width (45, 47) of one of the electric machines (3, 5),
wherein preferably a power supply cable (39, 39^{I}, 41, 41^{I}) from an electrical energy store (43) can be connected to the cable connection adapter (23, 25).

5. Drive block (1, 1^{I}) according to claim 4,
**characterized in that**
each of the inverters (11, 13) has its own cable connection adapter (23, 25) as an electrical energy supply point placed on the side, the connector positioning (49, 51) of which is placed in each case at a point on the longitudinal extent of the cable connection adapter (23, 25) such that an equal distance is obtained between each connector positioning (49, 51) and an energy source, in particular a central energy source.

6. Drive block (1, 1^{I}) according to claim 4 or claim 5,
**characterized in that**
a first current path length (53, 55), which is provided for a length of a first connection cable and a cable routing (57, 59) in a first cable connection adapter (23), and a second current path length (55), which is provided for a length of a second connection cable and a cable routing (57, 59) in a second cable connection adapter (25), match each other as a result of different lengths of the connection cables being equalized through the cable routings (57, 59).

7. Drive block (1, 1^{I}) according to any one of claims 4 to 6,
**characterized in that**
the cable connection adapter (23, 25) has multiple connectors or connector positions, to which, in particular in an exchangeable manner, a connection cable can be connected.

8. Drive block (1, 1^{I}) according to any one of the preceding claims,
**characterized in that**
one of the transmission housings (27, 29) is attached to the edge side of the drive block (1) and has an elliptical, sloping, groundwardly directed profile with two foci, one of said foci being used for a wheel output shaft.

9. Drive block (1, 1^{I}) according to any one of the preceding claims,
**characterized in that**
in the installation orientation (71) of the drive block (1), the transmission housings (27, 29) thereof, in the region of a lowest point (75) of the drive block (1), extend further into an area close to the ground than a lowest point of the electric machines (3, 5),
as a result of which in particular an installation space, which is bounded in the upward direction by the electric machines (3, 5), is laterally bordered by the transmission housings (27, 29).

10. Drive block (1, 1^{I}) according to any one of the preceding claims,
**characterized in that**
in the installation orientation (71) of the drive block (1), at least one of the inverters (11, 13) thereof is equipped with a plurality of upwardly projecting cooling fins (61, 63, 65, 67),
which preferably extend parallel to a longitudinal extent of one of the electric machines (3, 5).

11. Drive block (1, 1^{I}) according to any one of the preceding claims,
**characterized in that**
in the installation orientation (71) of the drive block (1), the two inverters (11, 13) are adjacently arranged on the upper side (77) of the drive block (1) and are placed in a manner rotated relative to each other about their housing vertical axes (79),
wherein in particular the inverters (11, 13) are placed as inverters (11, 13) arranged as a point-symmetrical mirror image of each other relative to a separation gap (81) therebetween.

12. Drive block (1, 1^{I}) according to any one of the preceding claims,
**characterized in that**
each of the inverters (11, 13) is connected
via its own electrical connection (83, 85) and/or
via its own cooling circuit inlet (87, 89) and/or
via its own cooling circuit outlet (91, 93) and/or
by a plurality of attachment points (95, 97, 99, 101), in particular dampingly mounted attachment points (95, 97, 99, 101),
to at least one other component of the drive block (1).

13. Drive block (1, 1^{I}) according to any one of the preceding claims,
**characterized in that**
the drive block (1, 1^{I}) is equipped with two parking locks (317, 319) and with a parking lock actuation mechanism (324, 348),
wherein in each case one inverter (11, 13), one electric machine (3, 5) and one transmission (7, 9) form a drive combination,
which constitutes a separate drive (205, 207),
each separate drive being equipped with one of the two parking locks (317, 319) for blocking an output shaft (31, 33) that leads out of the drive (205, 207) to a wheel drive, and **in that** the parking lock actuation mechanism (324, 348), which comprises
either a single parking lock actuator (347) for synchronously actuating the two parking locks (317, 319) to create a locked state, or
two parking lock actuators (321, 323) for creating a locked state in each drive combination,
is situated between the transmissions (7, 9) in an area (325) close to the ground when the drive block (1, 1') is in the installation orientation (71).

14. Drive block (1) according to claim 13,
**characterized in that**
each parking lock (317, 319) in the locked state inhibits rotation of the associated transmission (7, 9).

15. Drive block (1, 1^{I}) according to claim 13 or claim 14,
**characterized in that**
at least one of the parking locks (317, 319) is designed in such a way that the at least one parking lock (317, 319) in the locked state rotationally immobilizes a planetary transmission stage (349) of the transmission (7, 9) by engaging in a planet carrier,
and/or
**in that** the at least one parking lock (317, 319) in the locked state rotationally immobilizes an output gear (357, 357^{I}), in particular of a spur gear stage,
and/or
**in that** the at least one parking lock (317, 319) rotationally immobilizes an input shaft (359) of the transmission (7, 9),
and/or
a smaller pinion (331) of two pinions (331, 333, 333^{I}) that form a transfer stage (345) is blocked when the parking lock (317, 319) is in the engaged state,
wherein in particular the parking lock (317, 319) is a pawl-type lock (335) which is actuated hydraulically or by an electric motor,
and which preferably has a spring energy store (339).

## Revendications

1. Bloc d'entraînement (1, 1') d'un entraînement de véhicule automobile électromoteur pour deux entraînements de roue individuelle (3, 5) d'un même essieu,
avec une première machine électrique (3) qui a un premier axe de rotor, et
avec une première transmission (7) agencée sur le côté frontal de la première machine électrique (3) et
avec une seconde machine électrique (5) qui a un second axe de rotor, et
avec une seconde transmission (9) agencée sur le côté frontal de la seconde machine électrique (5),
qui sont agencées au moins partiellement pour un montage se recouvrant mutuellement dans une direction de véhicule longitudinale et
qui sont prévues pour un montage transversal de véhicule automobile,
et le bloc d'entraînement (1) possède deux onduleurs (11, 13), chacun des onduleurs (11, 13) pour le pilotage de l'une des deux machines électriques (3, 5),
**caractérisé en ce que**
le bloc d'entraînement (1, 1') possède une orientation de montage (71),
dans laquelle le bloc d'entraînement (1, 1') est prévu pour le montage dans la direction transversale de véhicule automobile (213),
où les machines électriques (3, 5) sont agencées se recouvrant au moins partiellement dans la direction de véhicule longitudinale,
dans lequel, dans la orientation de montage (71), un premier plateau-support (19) sépare au moins un des onduleurs (11, 13) avec son logement (15) en forme de caisson conçu en tant que caisson plus plat, presque carré, des composantes se trouvant en-dessous que sont la machine électrique (3, 5) et la transmission (7, 9),
et dans lequel les deux onduleurs (11, 13) sont agencés en un emplacement (73) du bloc d'entraînement (1) le plus élevé dans la orientation de montage (71)
et au moins un des onduleurs (11, 13) qui est agencé à côté de l'autre onduleur (11, 13) constitue de par sa forme de caisson environ une moitié d'un côté supérieur (77) du bloc d'entraînement (1),
et **en ce que** les deux machines électriques (3, 5) sont agencées en parallèle par rapport à leurs axes de rotor et l'une derrière l'autre par rapport à leurs logements,
moyennant quoi le bloc d'entraînement (1) se compose de deux unités de transmission de moteur en forme de L avec des logements de transmission (27, 29) qui leur sont propres.

2. Bloc d'entraînement (1, 1') selon la revendication 1,
**caractérisé en ce que**
les onduleurs (11, 13) en tant que premier onduleur (11) et en tant que second onduleur (13) constituent ensemble le côté supérieur (77) du bloc d'entraînement (1) et en particulier le premier onduleur (11) recouvre un côté droit des machines électriques (3, 5) agencées l'une derrière l'autre en tant qu'unité plate qui enjambe.

3. Bloc d'entraînement (1, 1') selon la revendication 1 ou la revendication 2, **caractérisé en ce que**
l'un des onduleurs (11, 13) repose sur le plateau-support (19, 21) en tant que plateau de recouvrement plat par-dessus les deux machines électriques (3, 5) ou le premier onduleur (11) est soutenu par le premier plateau-support (19) et le second onduleur (13) est soutenu par un second plateau-support (21).

4. Bloc d'entraînement (1, 1') selon l'une des revendications précédentes,
**caractérisé en ce que**
l'un des onduleurs (11, 13) présente un adaptateur de fiche de câble (23, 25), en particulier latéral, par lequel un positionnement de fiche (49, 51) est prédéfini en un emplacement d'une extension longitudinale ou d'une largeur (45, 47) de l'une des machines électriques (3, 5),
dans lequel de préférence un câble d'alimentation (39, 39', 41, 41^{'}) peut être raccordé à l'adaptateur de fiche de câble (23, 25) par un accumulateur d'énergie (43).

5. Bloc d'entraînement (1, 1') selon la revendication 4,
**caractérisé en ce que**
chacun des onduleurs (11, 13) a un adaptateur de fiche de câble (23, 25) qui lui est propre en tant que transfert électrique placé latéralement, dont le positionnement de fiche (49, 51) est placé chacun en un emplacement de l'extension longitudinale de l'adaptateur de fiche de câble (23, 25) de sorte que découle une même distance entre chaque positionnement de fiche (49, 51) et une source d'énergie, en particulier centrale.

6. Bloc d'entraînement (1, 1') selon la revendication 4 ou la revendication 5,
**caractérisé en ce que**
une première longueur de trajet de courant (53, 55), qui pour une longueur d'un premier câble de raccordement et d'un guidage de lignes (57, 59) est réservée dans un premier adaptateur de fiche de câble (23), et une seconde longueur de trajet de courant (55), qui pour une longueur d'un second câble de raccordement et d'un guidage de lignes (57, 59) est réservée dans un second adaptateur de fiche de câble (25), se correspondent mutuellement **en ce qu'**un équilibre entre des longueurs différentes des câbles de raccordement peut être produite par les guidages de lignes (57, 59).

7. Bloc d'entraînement (1, 1') selon l'une des revendications 4 à 6,
**caractérisé en ce que**
l'adaptateur de fiche de câble (23, 25) présente plusieurs fiches ou positions de fiche auxquelles un câble de raccordement peut être raccordé, en particulier alternativement.

8. Bloc d'entraînement (1, 1') selon l'une des revendications précédentes,
**caractérisé en ce que**
l'un des logements de transmission (27, 29) est monté, du côté de la bordure, contre le bloc d'entraînement (1) et présente un tracé elliptique, oblique et dirigé vers un sol avec deux foyers dont un foyer est utilisé pour un arbre de sortie de roue.

9. Bloc d'entraînement (1, 1') selon l'une des revendications précédentes,
**caractérisé en ce que**
dans la orientation de montage (71) du bloc d'entraînement (1), ses logements de transmission (27, 29) dans la zone d'un emplacement le plus profond (75) du bloc d'entraînement (1) vont plus loin dans une zone près du sol qu'un emplacement le plus profond des machines électriques (3, 5),
moyennant quoi en particulier un encombrement est encadré latéralement par les logements de transmission (27, 29), lequel est délimité vers le haut par les machines électriques (3, 5).

10. Bloc d'entraînement (1, 1') selon l'une des revendications précédentes,
**caractérisé en ce que**
dans la orientation de montage (71) du bloc d'entraînement (1), au moins l'un de ses onduleurs (11, 13) est doté de plusieurs nervures de refroidissement (61, 63, 65, 67) se situant vers le haut,
qui s'étendent de préférence parallèlement à une extension longitudinale de l'une des machines électriques (3, 5).

11. Bloc d'entraînement (1, 1') selon l'une des revendications précédentes,
**caractérisé en ce que**
dans la orientation de montage (71) du bloc d'entraînement (1) les deux onduleurs (11, 13) sont agencés de façon avoisinante contre le côté supérieur (77) du bloc d'entraînement (1) et placés de façon à être tournés l'un vers l'autre autour de leurs axes verticaux de logement (79),
dans lequel en particulier les onduleurs (11, 13) sont placés, relativement à une jointure de séparation (81) entre eux, en tant qu'onduleurs (11, 13) agencés de façon à se refléter symétriquement par rapport à un point.

12. Bloc d'entraînement (1, 1') selon l'une des revendications précédentes,
**caractérisé en ce que**
chacun des onduleurs (11, 13) est relié,
via un raccordement électrique (83, 85) qui lui est propre et/ou
via une entrée de circuit de refroidissement (87, 89) qui lui est propre et/ou
via une sortie de circuit de refroidissement (91, 93) qui lui est propre et/ou
par plusieurs points de fixation (95, 97, 99, 101), en particulier des points de fixation (95, 97, 99, 101) montés de façon à amortir,
à au moins une autre composante du bloc d'entraînement (1).

13. Bloc d'entraînement (1, 1') selon l'une des revendications précédentes,
**caractérisé en ce que**
le bloc d'entraînement (1, 1') est doté de deux blocages de stationnement (317, 319) ainsi que d'un système d'actionneur de blocage de stationnement (324, 348),
dans lequel une combinaison d'entraînement est formée à partir de respectivement un onduleur (11, 13), respectivement une machine électrique (3, 5) et respectivement une transmission (7, 9),
laquelle combinaison d'entraînement constitue un entraînement (205, 207) qui lui est propre,
lequel est respectivement doté de l'un des deux blocages de stationnement (317, 319) pour le blocage d'un arbre de sortie (31, 33) qui débouche depuis l'entraînement (205, 207) sur un entraînement de roue,
et **en ce que** le système d'actionneur de blocage de stationnement (324, 348),
qui soit comprend un seul actionneur de blocage de stationnement (347) pour l'actionnement synchrone des deux blocages de stationnement (317, 319) afin de créer un état bloqué,
soit comprend deux actionneurs de blocage de stationnement (321, 323) pour créer chacun un état bloqué dans chaque combinaison d'entraînement,
est installé dans la orientation de montage (71) du bloc d'entraînement (1, 1') dans une zone (325) près du sol entre les transmissions (7, 9).

14. Bloc d'entraînement (1) selon la revendication 13,
**caractérisé en ce que**
chaque blocage de stationnement (317, 319) à l'état bloqué provoque une inhibition de rotation à l'aide de sa transmission (7, 9).

15. Bloc d'entraînement (1, 1') selon la revendication 13 ou la revendication 14,
**caractérisé en ce que**
au moins l'un des blocages de stationnement (317, 319) est conçu de sorte que le au moins un blocage de stationnement (317, 319) à l'état bloqué fixe en rotation un étage de train épicycloïdal (349) de la transmission (7, 9) en l'engageant dans un support d'engrenage planétaire
et/ou
**en ce que** le au moins un blocage de stationnement (317, 319) fixe en rotation à l'état bloqué une roue dentée de sortie (357, 357'), en particulier d'un étage de roue dentée droite,
et/ou
**en ce que** le au moins un blocage de stationnement (317, 319) fixe en rotation un arbre d'entrée (359) de la transmission (7, 9)
et/ou
un blocage contre un pignon (331) plus petit de deux pignons (331, 333, 333') formant un étage de transfert (345) se produit à l'état inséré du blocage de stationnement (317, 319),
dans lequel en particulier le blocage de stationnement (317, 319) est un blocage à cliquet (335) actionné hydrauliquement ou par un moteur électrique,
lequel présente de préférence un accumulateur d'énergie à ressort (339).
